# EUROPEAN PATENT APPLICATION

(11) **EP 4 246 971 A1**
(43) Date of publication of application: **20.09.2023**
(21) Application number: 21900062.7
(22) Date of filing: 02.12.2021
(51) Int. Cl.: H04N 19/124

(54) **QUANTIZATION PARAMETER DECODING METHOD AND DEVICE**

(30) Priority: 03.12.2020 CN 202011396367
(71) Applicant: Huawei Technologies Co., Ltd., Shenzhen, Guangdong 518129 (CN)
(72) Inventor: ZHAO, Yin, Shenzhen, Guangdong 518129 (CN); CHEN, Shaolin, Shenzhen, Guangdong 518129 (CN); YANG, Haitao, Shenzhen, Guangdong 518129 (CN)
(74) Representative: Pfenning, Meinig & Partner mbB
(86) International application number: PCT/CN2021/135076
(87) International publication number: WO 2022/117036

(57) **Abstract**

Embodiments of the present invention provide a quantization parameter decoding method and an apparatus, and relate to the field of video or image compression technologies. The method includes: determining a current rectangular region to which a current CU belongs, where the current rectangular region is one of a plurality of rectangular regions included in a to-be-decoded CTU, and all of the plurality of rectangular regions meet a preset condition; determining a target context model based on a quantity of luminance QP differential values that have been obtained through decoding in the current rectangular region; decoding a bitstream based on the target context model to obtain a target binary symbol, where the target binary symbol indicates whether a luminance QP differential value of the current CU is 0, and the target binary symbol is a binary symbol of the luminance QP differential value of the current CU; determining the luminance QP differential value of the current CU based on the target binary symbol; and obtaining a luminance QP of the current CU based on the luminance QP differential value of the current CU and a luminance QP prediction value of the current CU. Embodiments of the present invention can effectively reduce bit overheads of the luminance QP differential value in the bitstream, and improve coding efficiency.

## Description

This application claims priority to Chinese Patent Application No. 202011396367.1, filed with the China National Intellectual Property Administration on December 3, 2020 and entitled "QUANTIZATION PARAMETER DECODING METHOD AND APPARATUS", which is incorporated herein by reference in its entirety.

### TECHNICAL FIELD

Embodiments of the present invention relate to the field of video or image compression technologies, and in particular, to a quantization parameter decoding method and an apparatus.

### BACKGROUND

Video coding (video encoding and decoding) is widely used in digital video applications such as broadcast digital television, video transmission over the internet and mobile networks, real-time conversational applications such as video chat and video conferencing, DVDs and Blu-ray discs, and security applications of video content collection and editing systems and camcorders.

A large amount of video data needed to depict even a relatively short video can be substantial, which may result in difficulties when the data is to be streamed or otherwise communicated across a network with limited bandwidth capacity. Therefore, video data is generally compressed before being communicated across modern telecommunications networks. A size of a video could also be an issue when the video is stored on a storage device because memory resources may be limited. A video compression device often uses software and/or hardware at a source side to code the video data prior to transmission or storage. This decreases an amount of data needed to indicate digital video images. The compressed data is then received at a destination side by a video decompression device. With limited network resources and ever increasing demands of higher video quality, improved compression and decompression techniques that improve a compression ratio with little to no sacrifice in image quality are desirable.

In the H.265/HEVC standard, one coding unit (Coding Unit, CU) includes one luminance quantization parameter (quantization parameter, QP) and two chrominance quantization parameters, where the chrominance quantization parameter may be derived from the luminance quantization parameter. Therefore, improving coding efficiency of the luminance quantization parameter becomes a key technology to improve coding efficiency of a video.

### SUMMARY

Embodiments of the present invention provide a quantization parameter decoding method and an apparatus, which can effectively reduce bit overheads of a luminance QP differential value in a bitstream, and improve coding efficiency.

According to a first aspect, an embodiment of the present invention provides a quantization parameter decoding method, where the method is performed by a decoder. The method includes:
determining a current rectangular region to which a current coding unit CU belongs, where the current rectangular region is one of a plurality of rectangular regions included in a to-be-decoded coding tree unit CTU, and all of the plurality of rectangular regions meet a preset condition; determining a target context model based on a quantity of luminance quantization parameter QP differential values that have been obtained through decoding in the current rectangular region; decoding a bitstream based on the target context model to obtain a target binary symbol, where the target binary symbol indicates whether a luminance QP differential value of the current CU is 0, and the target binary symbol is a binary symbol of the luminance QP differential value of the current CU; determining the luminance QP differential value of the current CU based on the target binary symbol; and obtaining a luminance QP of the current CU based on the luminance QP differential value of the current CU and a luminance QP prediction value of the current CU.

Corresponding to an encoding side, a decoding side may sequentially decode bitstreams according to a preset decoding order (corresponding to an encoding order) to obtain respective encoding information of a plurality of CUs included in the CTU. In the decoding process, a CU that is decoding the bitstream to determine encoding information of the CU is the current CU.

In the process of decoding the bitstream, the decoder may determine, based on a syntax element carried in the bitstream, a split mode of a currently processed CTU. After splitting the CTU in the split mode, the decoder determines, based on syntax elements of coding tree nodes obtained through split, whether to continue to split the coding tree nodes, and split modes of the coding tree nodes, and the like. In the foregoing process, for each coding tree node, the decoder may determine whether a rectangular region corresponding to the coding tree node may be determined as one rectangular region of the CTU.

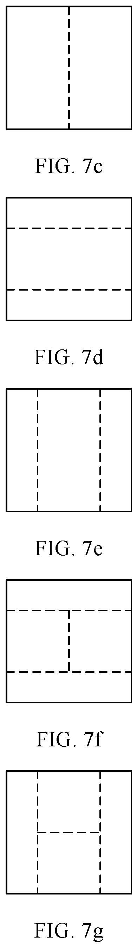

In a possible implementation, that the rectangular region corresponding to the coding tree node is determined as one rectangular region of the CTU needs to meet a preset condition, and the preset condition may include the following:
(1) An area of the rectangular region corresponding to the coding tree node is equal to twice a set area, and the rectangular region is split into three coding tree nodes in a triple tree split mode.
   The set area limits the area of the rectangular region, and the decoder compares the area of the rectangular region corresponding to the coding tree node with the set area. If the area of the rectangular region corresponding to the coding tree node is twice the set area, the coding tree node is split into the three coding tree nodes in the TT split mode. For example, as shown in FIG. 7d and FIG. 7e, if the area of the rectangular region corresponding to the coding tree node is twice the set area, the coding tree node is split into the three coding tree nodes in the TT split mode. Therefore, the rectangular region corresponding to the coding tree node meets the preset condition, and may be determined as one rectangular region of the CTU. In addition, after the coding tree node is split in the TT split mode, although an area of a middle region of the coding tree node is equal to the set area, the middle region of the coding tree node is not determined as one rectangular region of the CTU.
(2) An area of the rectangular region corresponding to the coding tree node is equal to a set area, and the rectangular region is split into at least two coding tree nodes.

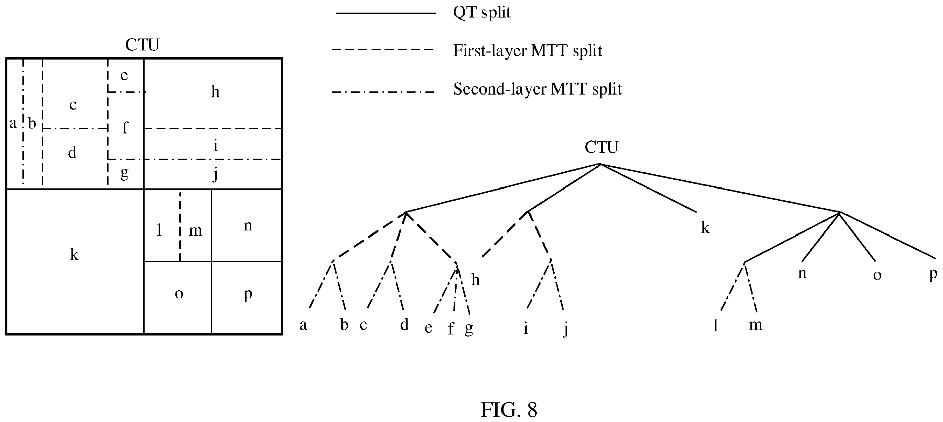

The set area limits the area of the rectangular region, and the decoder compares the area of the rectangular region corresponding to the coding tree node with the set area. If the area of the rectangular region corresponding to the coding tree node is equal to the set area, and the coding tree node is split into the at least two coding tree nodes, for example, a split flag bit split_cu_flag of the coding tree node indicates that the coding tree node is continued to be split, the coding tree node is determined as one rectangular region of the CTU. For example, as shown in FIG. 8, the set area is 1/4 of the CTU, and an area of a rectangular region corresponding to a coding tree node that includes h, i, and j and that is at an upper left corner of the CTU is 1/4 of the CTU. In addition, the coding tree node is split into three coding tree nodes: h, i, and j. Therefore, the rectangular region corresponding to the coding tree node meets the preset condition, and may be determined as one rectangular region of the CTU.

In the foregoing two conditions (1) and (2), a shape of the rectangular region is not specifically limited. To be specific, the rectangular region may be a rectangular region or a square region. In a possible implementation, if the condition (2) is met, the shape of the rectangular region may be further defined as a square. For this case, refer to a quantization group (quantization group, QG) in the H.265/HEVC standard. One QG corresponds to an NxN region in a picture.

In this embodiment of the present invention, the plurality of rectangular regions included in the CTU may separately meet the foregoing condition (1) or (2), but it is not limited that all the rectangular regions included in the CTU meet a same condition.

The set area may be transmitted in the bitstream. For example, the set area may be transmitted in a high-layer syntax structure such as a sequence header, a picture header, a slice header, or a picture parameter set (picture parameter set, PPS).

In this embodiment of the present invention, the current rectangular region to which the current CU belongs may be determined based on a location relationship between samples included in a picture region corresponding to the current CU and the rectangular regions included in the CTU.

In a possible implementation, a rectangular region including all samples included in the picture region corresponding to the current CU is determined as the current rectangular region to which the current CU belongs. To be specific, in the plurality of rectangular regions included in the CTU, when locations of all the samples included in the picture region corresponding to the current CU are located in one rectangular region, the rectangular region is the current rectangular region to which the current CU belongs.

In a possible implementation, a rectangular region including a specific sample in all samples included in the picture region corresponding to the current CU is determined as the current rectangular region to which the current CU belongs. In this embodiment of the present invention, the current rectangular region to which the current CU belongs may be determined in any one of the following manners:
(1) determining a rectangular region that is in the plurality of rectangular regions and that includes the upper left corner of the current CU as the current rectangular region;
(2) determining a rectangular region that is in the plurality of rectangular regions and that includes a lower right corner of the current CU as the current rectangular region; or
(3) determining a rectangular region that is in the plurality of rectangular regions and that includes a center point of the current CU as the current rectangular region.

A luminance QP differential value of any CU is a signed integer, and may be 0, a positive integer, or a negative integer. The luminance QP differential value of the CU is usually indicated by using two methods.

A first method is using a syntax element to indicate the luminance QP differential value of the CU. For example, a syntax element cu_qp_delta in the AVS2 standard is binarized by using unary code. For example, signed integers 0, 1, -1, 2, and -2 may be binarized into binary symbol strings 1, 01, 001, 0001, and 00001 respectively. A first binary symbol (namely, a target binary symbol) of the binary symbol strings indicates whether cu_qp_delta (indicating the luminance QP differential value of the CU) to which the first binary symbol (namely, the target binary symbol) belongs is 0. When the first binary symbol of cu_qp_delta is 1, it indicates that cu_qp_delta (that is, the luminance QP differential value of the CU) to which the first binary symbol belongs is 0. When the first binary symbol of cu_qp_delta is 0, it indicates that cu_qp_delta (that is, the luminance QP differential value of the CU) to which the first binary symbol belongs is not 0, and a bitstream continues to be parsed to obtain another binary symbol of cu_qp_delta, that is, a specific non-zero value of the luminance QP differential value of the CU.

After decoding the bitstream to obtain the first binary symbol of the syntax element cu_qp_delta, the decoder may determine, based on the binary symbol, that if the luminance QP differential value of the current CU is 0, parsing of the syntax element cu_qp_delta is completed; and if the luminance QP differential value of the current CU is not 0, need to continuously decode the bitstream to obtain the specific non-zero value of the syntax element cu_qp_delta.

A second method is using two syntax elements to indicate the luminance QP differential value of the CU, where one syntax element indicates an absolute value of the luminance QP differential value of the CU, and the other syntax element indicates a sign of the luminance QP differential value of the CU, for example, a syntax element cu_qp_delta_abs in the H.265 standard (indicating the absolute value of the luminance QP differential value of the CU) and a syntax element cu_qp_delta_sign_flag (indicating the sign of the luminance QP differential value of the CU). A first binary symbol (that is, a target binary symbol) obtained after cu_qp_delta_abs is binarized indicates whether the luminance QP differential value of the CU is 0. When the first binary symbol of cu_qp_delta_abs is 0, it indicates that cu_qp_delta_abs (that is, the absolute value of the luminance QP differential value of the CU) to which the first binary symbol belongs is 0, and cu_qp_delta_sign_flag is also 0. When the first binary symbol of cu_qp_delta_abs is 1, it indicates that cu_qp_delta_abs (that is, the absolute value of the luminance QP differential value of the CU) to which the first binary symbol belongs is not 0, and a bitstream continues to be parsed to obtain another binary symbol of cu_qp_delta_abs, that is, a specific non-zero value of the absolute value of the luminance QP differential value of the CU, and to determine whether cu_qp_delta_sign_flag (that is, the sign of the luminance QP differential value of the CU) indicates a plus sign or a minus sign. In another manner, when the first binary symbol of cu_qp_delta_abs is 1, it indicates that cu_qp_delta_abs (that is, the absolute value of the luminance QP differential value of the CU) to which the first binary symbol belongs is 0, and cu_qp_delta_sign_flag is also 0. When the first binary symbol of cu_qp_delta_abs is 0, it indicates that cu_qp_delta_abs (that is, the absolute value of the luminance QP differential value of the CU) to which the first binary symbol belongs is not 0, and a bitstream continues to be parsed to obtain another binary symbol of cu_qp_delta_abs, that is, a specific non-zero value of the absolute value of the luminance QP differential value of the CU, and to determine whether cu_qp_delta_sign_flag (that is, the sign of the luminance QP differential value of the CU) indicates a plus sign or a minus sign.

After decoding the bitstream to obtain the first binary symbol of the syntax element cu_qp_delta_abs, the decoder may determine, based on the binary symbol, that if the absolute value of the luminance QP differential value of the current CU is 0, parsing of the syntax element cu_qp_delta_abs is completed. When cu_qp_delta_abs is 0, the syntax element cu_qp_delta_sign_flag is 0 by default. In this case, to reduce bitstream overheads, the encoder may not need to transmit the syntax element cu_qp_delta_sign_flag in the bitstream; and if determining that the absolute value of the luminance QP differential value of the current CU is not 0, need to continuously decode the bitstream to obtain the specific non-zero value of the syntax element cu_qp_delta_abs, and to determine whether the syntax element cu_qp_delta_sign_flag indicates the plus sign or the minus sign. The decoder may obtain a luminance QP differential value CuDeltaQp=cu_qp_delta_abs^{∗}(cu_qp_delta_sign_flag?-1:1) of the current CU based on syntax elements cu_qp_delta_abs and cu_qp_delta_sign_flag. Optionally, the syntax element cu_qp_delta_sign_flag may be decoded in a bypass (bypass) mode of CABAC.

Optionally, if it is determined that the bitstream does not include the syntax element cu_qp_delta_abs, the decoder may determine that the luminance QP differential value CuDeltaQp of the current CU is 0.

At an encoder side, if the current CU is a CU that includes a luminance component and a chrominance component, and the luminance component or the chrominance component has a residual, the encoder may transmit a luminance QP differential value in a syntax element of the current CU; and the decoder correspondingly needs to parse the luminance QP differential value. If the current CU is a CU that includes only a luminance component, and the luminance component has a residual, the encoder may transmit a luminance QP differential value in a syntax element of the current CU; and the decoder correspondingly needs to parse the luminance QP differential value. If the current CU is a CU that includes only a chrominance component, the encoder may not transmit a luminance QP differential value in a syntax element of the current CU; and the decoder correspondingly does not need to parse the luminance QP differential value. If the current CU is a CU that includes a luminance component and a chrominance component, and neither the luminance component nor the chrominance component has a residual, the encoder may not transmit a luminance QP differential value in a syntax element of the current CU; and the decoder correspondingly does not need to parse the luminance QP differential value. If the current CU is a CU that includes only a luminance component, and the luminance component has no residual, the encoder may not transmit a luminance QP differential value in a syntax element of the current CU; and the decoder correspondingly does not need to parse the luminance QP differential value. For the foregoing cases in which the decoder does not need to parse the luminance QP differential value of the current CU, the decoder may assign a default value to the luminance QP differential value of the current CU, for example, 0.

Correspondingly, at a decoder side, if the decoder determines the luminance QP differential value of the current CU by parsing the binary symbol, the quantity of luminance QP differential values that have been obtained through decoding in the current rectangular region to which the current CU belongs is increased by 1. If the luminance QP differential value of the current CU does not explicitly appear in the bitstream, the quantity of luminance QP differential values that have been obtained through decoding in the current rectangular region to which the current CU belongs remains unchanged.

For the current CU, after obtaining the absolute value and the sign of the luminance QP differential value of the current CU through parsing, the decoder may add 1 to the quantity of luminance QP differential values that have been obtained through decoding in the current rectangular region, as shown in the following:

```
          if(!FixedQP&&CuDeltaQpFlag&&CuCtp&&(component!='COMPONENT_CHROMA')){
              cu_qp_delta_abs
              if(cu_qp_delta_abs)
                   cu_qp_delta_sign_flag
              NumDeltaQp+=1 }
```

!FixedQP=1&&CuDeltaQpFlag=1 indicates that the decoding method in this embodiment of the present invention is enabled. component!='COMPONENT_CHROMA' indicates that a component of the current CU is not a chrominance component. cu_qp_delta_abs indicates the absolute value of the luminance QP differential value of the current CU. If cu_qp_delta_abs is not 0, cu_qp_delta_sign_flag (the sign of the luminance QP differential value of the current CU) is parsed. Based on the foregoing cases, NumDeltaQp is increased by 1, and NumDeltaQp may change with a decoding process of the decoder.

Therefore, when obtaining any current CU through parsing, the decoder may obtain a quantity of luminance QP differential values that have been obtained through decoding in a current rectangular region to which the current CU belongs. For example, if the current CU is a first CU to be decoded in the current rectangular region, the foregoing quantity is 0 when the current CU is decoded. If the current CU is not a first CU to be decoded in the current rectangular region, the foregoing quantity is an accumulated value when the current CU is decoded, and the accumulated value may be 0 or may not be 0.

In a possible implementation, the decoder may determine the target context model based on a smaller value in a first set threshold and the quantity of luminance QP differential values that have been obtained through decoding.

Optionally, the decoder determines, as an index offset of the target context model, the smaller value in the first set threshold and the quantity of luminance QP differential values that have been obtained through decoding; and finally determines a candidate context model that is in index offsets of a plurality of candidate context models used to decode the bitstream and that is consistent with the index offset of the target context model as the target context model.

For example, a context model (also referred to as a binary symbol model) ctx=ctxArray[ctxIdx], where ctxarray is an array that stores the binary symbol model, and ctxIdx is an index value of the array (that is, a number of the binary symbol model). Therefore, the corresponding binary symbol model can be found from the ctxArray array based on ctxldx. A number of a binary symbol model used by the syntax element ctxIdx=ctxIdxStart + ctxIdxInc, where ctxIdxStart and ctxIdxInc are shown in Table 1.

**Table 1 ctxIdxStart and ctxIdxInc corresponding to syntax elements**

| Syntax element | ctxIdxInc | ctxIdxStart | ctx quantity |
|---|---|---|---|
| ··· | | | |
| ctp_y[i] | 0 | 144 | 1 |
| cu_qp_delta_abs | Refer to 8.3.3.2.xx | 145 | 4 |
| ··· | | | |

In this embodiment of the present invention, the target binary symbol is the first binary symbol of the syntax element cu_qp_delta_abs, and ctxIdxStart corresponding to the syntax element cu_qp_delta_abs is equal to 145. A total of four candidate context models may be used to parse the syntax element cu_qp_delta_abs, and index offsets ctxIdxInc (Inc indicates an increment) of the four candidate context models are: 0, 1, 2, or 3. In this embodiment of the present invention, context models of binary symbols included in the syntax element cu_qp_delta_abs may be determined by using the following method:
If binIdx is 0, ctxIdxInc=min(NumDeltaQp, 2); otherwise
ctxIdxInc=3.

ctxIdxInc indicates an index offset of the context model, binIdx indicates a quantity of binary symbols of the syntax element cu_qp_delta_abs, that binIdx is 0 indicates the first binary symbol (that is, the target binary symbol) of the syntax element cu_qp_delta_abs, and that binIdx is not 0 indicates another binary symbol of the syntax element cu_qp_delta_abs other than the first binary symbol. NumDeltaQp indicates the quantity of luminance QP differential values that have been obtained through decoding in the current rectangular region. min() indicates to select a smaller value.

In the foregoing embodiment, the decoder may determine a start number (ctxIdxStart) of the context model of the syntax element cu_qp_delta_abs based on Table 1. For the first binary symbol (the target binary symbol) of the syntax element cu_qp_delta_abs, the index offset ctxIdxInc of the context model of the target binary symbol is determined by using the foregoing function in which a smaller value is selected, and the index ctxIdx of the context model of the target binary symbol is obtained. For another binary symbol of the syntax element cu_qp_delta_abs, an index offset ctxidxinc of a context model of the another binary symbol is equal to 3, and an index ctxIdx=148 of the context model of the another binary symbol is obtained.

Optionally, when the quantity of luminance QP differential values that have been obtained through decoding is 0, if a luminance QP differential value of a previous CU is 0, the index offset of the target context model is 0. Alternatively, if a luminance QP differential value of a previous CU is not 0, the index offset of the target context model is 1, and the previous CU is a CU previous to the current CU in the decoding order. For example, the previous CU may be a left neighboring CU of the current CU, the previous CU may be an upper neighboring CU of the current CU, or the previous CU may be a decoded CU previous to the current CU. Alternatively, when the quantity of luminance QP differential values that have been obtained through decoding is not 0, the index offset of the target context model is 2. Alternatively, the index offset of the target context model is associated with the quantity of luminance QP differential values that have been obtained through decoding and a second set threshold. Finally, the candidate context model that is in the index offsets of the plurality of candidate context models used to decode the bitstream and that is consistent with the index offset of the target context model is determined as the target context model.

If the quantity of luminance QP differential values that have been obtained through decoding in the current rectangular region is 0, a luminance QP differential value of the CU (the previous CU) decoded previous to the current CU is obtained. In this case, the previous CU and the current CU may belong to a same rectangular region or different rectangular regions. If the luminance QP differential value of the previous CU is 0, the index offset of the target context model is 0. If the luminance QP differential value of the previous CU is not 0, the index offset of the target context model is 1.

If the quantity of luminance QP differential values that have been obtained through decoding in the current rectangular region is greater than 0, the index offset of the target context model may be 2. Alternatively, the index offset of the target context model is associated with the quantity of luminance QP differential values that have been obtained through decoding and the second set threshold. For example, the index offset ctxIdxInc of the target context model is equal to min(Num-1, Y) + 2, where Y is the second set threshold.

When selecting the target context model, the decoder refers to the quantity of luminance QP differential values that have been obtained through decoding in the current rectangular region to which the current CU belongs, so that a matching rate between the target context model and a value of the target binary symbol can be improved, thereby improving decoding efficiency of the target binary symbol. This is especially applicable to a case in which most rectangular regions include only one or two CUs whose luminance QP differential values need to be transmitted, and a few rectangular regions include more than two CUs whose luminance QP differential values need to be transmitted. This can effectively reduce bit overheads of the QP differential value in the bitstream.

If the luminance QP differential value of the current CU is indicated by using two syntax elements, for example, the syntax element cu_qp_delta_abs indicates the absolute value of the luminance QP differential value of the CU, and the syntax element cu_qp_delta_sign_flag indicates the sign of the luminance QP differential value of the CU, the decoder may determine, based on the target binary symbol, when the target binary symbol indicates that the luminance QP differential value of the current CU is 0, that both the sign and the absolute value of the current luminance QP differential value of the current CU are 0; and when the target binary symbol indicates that the luminance QP differential value of the current CU is not 0, to decode the bitstream to obtain the sign and the absolute value of the luminance QP differential value of the current CU.

If the luminance QP differential value of the current CU is indicated by using one syntax element, for example, the syntax element cu_qp_delta indicates the luminance QP differential value of the CU, which is a signed integer, the decoder may determine, based on the target binary symbol, when the target binary symbol indicates that the luminance QP differential value of the current CU is 0, that the current luminance QP differential value of the current CU is 0; and when the target binary symbol indicates that the luminance QP differential value of the current CU is not 0, to decode the bitstream to obtain the luminance QP differential value of the current CU.

The luminance QP prediction value of the current CU may be obtained by using the following method: When the current CU is not a CU that ranks first in the decoding order in the current rectangular region, a luminance QP of a previous CU is determined as the luminance QP prediction value of the current CU, where the previous CU is a CU previous to the current CU in the decoding order; or when the current CU is a CU that ranks first in the decoding order in the current rectangular region, a luminance QP of a neighboring CU of the current CU is determined as the luminance QP prediction value of the current CU, where the neighboring CU includes a luminance component. The neighboring CU may be the left neighboring CU and/or the upper neighboring CU of the current CU. In this way, for a CU that is not the first to be decoded in the rectangular region, the decoder may directly use a luminance QP of a CU that is decoded previous to the CU as a luminance QP prediction value of the CU. This improves efficiency of obtaining luminance QPs of CUs in the rectangular region, and further improves decoding efficiency.

In other words, if coordinates of an upper left corner of the current CU are equal to coordinates (CuQpGroupX, CuQpGroupY) of an upper left corner of the current rectangular region, it indicates that the current CU is a CU whose decoding order ranks first in the current rectangular region. The luminance QP prediction value PreviousCuQP of the current CU is equal to a luminance QP of the left neighboring CU of the current CU, and the left neighboring CU includes a luminance component. Otherwise, (that is, the coordinates of the upper left corner of the current CU are not equal to the coordinates (CuQpGroupX, CuQpGroupY) of the upper left corner of the current rectangular region, and it indicates that the current CU is not the CU whose decoding order ranks first in the current rectangular region), the luminance QP prediction value PreviousCuQP of the current CU is equal to a luminance QP of a previous CU of the current CU, and the previous CU also includes a luminance component.

The decoder may add the luminance QP prediction value of the current CU and the luminance QP differential value of the current CU to obtain the luminance QP of the current CU.

In this embodiment of the present invention, the context model of the first binary symbol of the luminance QP differential value of the current CU is determined based on a quantity of luminance QP differential values that have been obtained through decoding in a set rectangular region. Therefore, for a first binary symbol of a first luminance QP differential value, a first binary symbol of a second luminance QP differential value, and the like in the set rectangular region, different context models are separately used to model probability models to determine whether the first binary symbol of the first luminance QP differential value, the first binary symbol of the second luminance QP differential value, and the like are 0. This can improve a matching rate of the probability model. However, for a case in which most set rectangular regions in the CTU include only one or two CUs whose luminance QP differential values need to be transmitted, and only a few set rectangular regions include more than two CUs whose luminance QP differential values need to be transmitted, when a luminance QP differential value that is always 0 is encoded, only a few bits need to be consumed (a typical value is about 0.05% of a total bit rate). This can effectively reduce bit overheads of the luminance QP differential value in the bitstream in this case, and further improves encoding efficiency.

After obtaining the luminance QP of the current CU, the decoder may perform inverse quantization processing based on the luminance QP to obtain a luminance inverse quantization coefficient of the current CU, perform inverse transform processing on the luminance inverse quantization coefficient of the current CU to obtain a luminance residual of the current CU, and reconstruct the luminance component of the current CU based on the luminance residual of the current CU. For this process, refer to description of a decoder 30 below. Details are not described herein again.

According to a second aspect, an embodiment of the present invention provides a decoder, including a processing circuit, configured to perform the method according to any one of the foregoing first aspect.

According to a third aspect, an embodiment of the present invention provides a computer program product, including program code. When the program code is executed on a computer or a processor, the program code is used to perform the method according to any one of the foregoing first aspect.

According to a fourth aspect, an embodiment of the present invention provides a decoder, including: one or more processors; and a non-transitory computer-readable storage medium, coupled to the processor and storing a program executed by the processor. When executed by the processor, the program enables the decoder to perform the method according to any one of the foregoing first aspect.

According to a fifth aspect, an embodiment of the present invention provides a non-transitory computer-readable storage medium, including program code. When the program code is executed by a computer device, the program code is used to perform the method according to any one of the foregoing first aspect.

According to a sixth aspect, an embodiment of the present invention relates to a decoding apparatus. For beneficial effects, refer to the description of the first aspect. Details are not described herein again. The decoding apparatus has a function of implementing the behavior in the method embodiment in the first aspect. The function may be implemented by hardware, or may be implemented by hardware executing corresponding software. The hardware or the software includes one or more modules corresponding to the foregoing function. In a possible implementation, the decoding apparatus includes: an entropy decoding module, configured to: determine a current rectangular region to which a current coding unit CU belongs, where the current rectangular region is one of a plurality of rectangular regions included in a to-be-decoded coding tree unit CTU, and all of the plurality of rectangular regions meet a preset condition, determine a target context model based on a quantity of luminance quantization parameter QP differential values that have been obtained through decoding in the current rectangular region, and decode a bitstream based on the target context model to obtain a target binary symbol, where the target binary symbol indicates whether a luminance QP differential value of the current CU is 0, and the target binary symbol is a binary symbol of the luminance QP differential value of the current CU; and an inverse quantization module, configured to: determine the luminance QP differential value of the current CU based on the target binary symbol, and obtain a luminance QP of the current CU based on the luminance QP differential value of the current CU and a luminance QP prediction value of the current CU.

In a possible implementation, that all of the plurality of rectangular regions meet a preset condition includes any one or more of the following cases: an area of one or more rectangular regions in the plurality of rectangular regions is equal to twice a set area, and the one or more rectangular regions are split into three coding tree nodes in a triple tree split mode; or an area of one or more rectangular regions in the plurality of rectangular regions is equal to a set area, and the one or more rectangular regions are split into at least two coding tree nodes.

In a possible implementation, the entropy decoding module is specifically configured to determine the target context model based on a smaller value in a first set threshold and the quantity of luminance QP differential values that have been obtained through decoding.

In a possible implementation, the entropy decoding module is specifically configured to: determine, as an index offset of the target context model, the smaller value in the first set threshold and the quantity of luminance QP differential values that have been obtained through decoding; or determine, from a plurality of candidate context models, a candidate context model that is in index offsets of the plurality of candidate context models and that is consistent with an index offset of the target context model as the target context model.

In a possible implementation, the apparatus further includes a prediction module, configured to: when the current CU is not a CU that ranks first in a decoding order in the current rectangular region, determine a luminance QP of a previous CU as the luminance QP prediction value of the current CU, where the previous CU is a CU previous to the current CU in the decoding order; or when the current CU is a CU that ranks first in a decoding order in the current rectangular region, determine a luminance QP of a neighboring CU of the current CU as the luminance QP prediction value of the current CU, where the neighboring CU includes a luminance component.

In a possible implementation, the inverse quantization module is specifically configured to: when the target binary symbol indicates that the luminance QP differential value of the current CU is 0, determine that both a sign and an absolute value of the luminance QP differential value of the current CU are 0; and when the target binary symbol indicates that the luminance QP differential value of the current CU is not 0, decode the bitstream to obtain the sign and the absolute value of the luminance QP differential value of the current CU.

In a possible implementation, a syntax element indicating the luminance QP differential value of the current CU includes a first syntax element indicating the sign of the luminance QP differential value of the current CU and a second syntax element indicating the absolute value of the luminance QP differential value of the current CU.

In a possible implementation, the apparatus further includes an inverse transform module and a reconstruction module. The inverse quantization module is further configured to perform inverse quantization processing based on the luminance QP of the current CU to obtain a luminance inverse quantization coefficient of the current CU; the inverse transform module is configured to perform inverse transform processing based on the luminance inverse quantization coefficient of the current CU to obtain a luminance residual of the current CU; and the reconstruction module is configured to reconstruct a luminance component of the current CU based on the luminance residual of the current CU.

In a possible implementation, the entropy decoding module is specifically configured to: determine a rectangular region that is in the plurality of rectangular regions and that includes an upper left corner of the current CU as the current rectangular region; determine a rectangular region that is in the plurality of rectangular regions and that includes a lower right corner of the current CU as the current rectangular region; or determine a rectangular region that is in the plurality of rectangular regions and that includes a center point of the current CU as the current rectangular region.

Details of one or more embodiments are described in detail in the accompanying drawings and the description below. Other features, objects, and advantages are apparent from the description, drawings, and claims.

### BRIEF DESCRIPTION OF DRAWINGS

The following describes accompanying drawings used in embodiments of the present invention.
FIG. 1A is an example block diagram of a coding system 10 according to an embodiment of the present invention;
FIG. 1B is an example block diagram of a video coding system 40 according to an embodiment of the present invention;
FIG. 2 is an example block diagram of a video encoder 20 according to an embodiment of the present invention;
FIG. 3 is an example block diagram of a video decoder 30 according to an embodiment of the present invention;
FIG. 4 is an example block diagram of a video coding device 400 according to an embodiment of the present invention;
FIG. 5 is an example block diagram of an apparatus 500 according to an embodiment of the present invention;
FIG. 6 is an example flowchart of a quantization parameter decoding method according to an embodiment of the present invention;
FIG. 7a to FIG. 7g are schematic diagrams of several examples of picture split modes according to an embodiment of the present invention;
FIG. 8 is an example schematic diagram of a QT-MTT split mode according to an embodiment of the present invention;
FIG. 9 is an example schematic diagram of a current CU and a current rectangular region according to an embodiment of the present invention; and
FIG. 10 is an example schematic diagram of a structure of a decoding apparatus 1000 according to an embodiment of the present invention.

### DESCRIPTION OF EMBODIMENTS

Embodiments of the present invention provide a video image compression technology, and specifically provide a quantization parameter decoding method to improve a conventional hybrid video encoding and decoding system.

Video coding usually refers to processing of a sequence of pictures, where the sequence of pictures forms a video or a video sequence. In the field of video coding, the terms "picture (picture)", "frame (frame)", and "image (image)" may be used as synonyms. Video coding (or usually referred to as coding) includes two parts: video encoding and video decoding. Video encoding is performed at a source side, and usually includes processing (for example, compressing) an original video picture to reduce an amount of data required for representing the video picture (for more efficient storage and/or transmission). Video decoding is performed on a destination side, and usually includes inverse processing in comparison with processing of an encoder to reconstruct the video picture. Embodiments referring to "coding" of video pictures (or usually referred to as pictures) shall be understood to relate to "encoding" or "decoding" of video pictures or video sequences. A combination of an encoding part and a decoding part is also referred to as encoding and decoding (encoding and decoding, CODEC).

In a case of lossless video coding, an original video picture can be reconstructed. In other words, a reconstructed video picture has same quality as the original video picture (It is assumed that no transmission loss or other data loss occurs during storage or transmission). In a case of lossy video coding, further compression is performed through, for example, quantization, to reduce an amount of data required for representing a video picture, and the video picture cannot be completely reconstructed at a decoder side. In other words, quality of a reconstructed video picture is lower or poorer than that of the original video picture.

Several video coding standards are used for "lossy hybrid video encoding and decoding" (that is, spatial and temporal prediction in a pixel domain is combined with 2D transform coding for applying quantization in a transform domain). Each picture of a video sequence is usually partitioned into a set of non-overlapping blocks, and coding is usually performed at a block level. To be specific, the encoder usually processes, that is, encodes, a video at a block (video block) level. For example, a prediction block is generated through spatial (intra-picture) prediction and temporal (inter-picture) prediction, the prediction block is subtracted from a current block (block being processed or to be processed) to obtain a residual block, and the residual block is transformed in the transform domain and quantized to reduce an amount of data that is to be transmitted (compressed). At the decoder side, an inverse processing part relative to the encoder is applied to an encoded block or a compressed block to reconstruct the current block for representation. Further, the encoder needs to repeat the processing step of the decoder, so that the encoder and the decoder generate same prediction (for example, intra prediction and inter prediction) and/or a same reconstruction pixel, for processing, that is, for encoding a subsequent block.

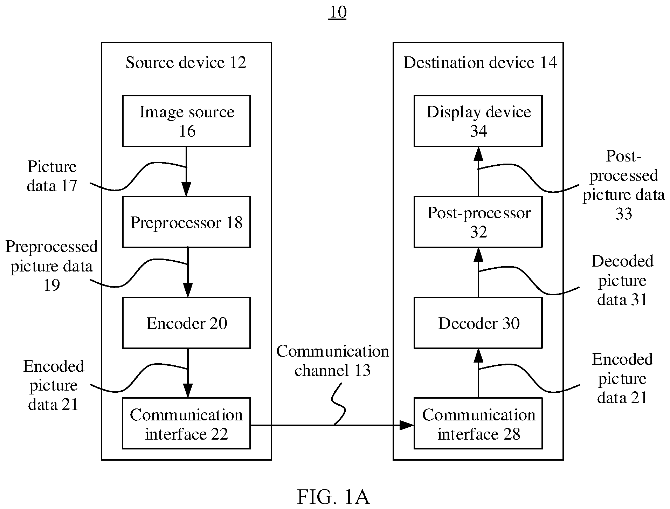

In the following embodiment of a coding system 10, an encoder 20 and a decoder 30 are described based on FIG. 1A to FIG. 3.

FIG. 1A is an example block diagram of a coding system 10 according to an embodiment of the present invention, for example, a video coding system 10 (or simply referred to as a coding system 10) that may use a technology of embodiments of the present invention. The video encoder 20 (or the encoder 20 for short) and the video decoder 30 (or the decoder 30 for short) of the video coding system 10 represent examples of devices that may be configured to perform techniques in accordance with various examples described in embodiments of the present invention.

As shown in FIG. 1A, the coding system 10 includes a source device 12 configured to provide encoded picture data 21 for a destination device 14 configured to decode the encoded picture data 21.

The source device 12 includes the encoder 20, and may additionally or optionally include a picture source 16, a preprocessor (or preprocessing unit) 18, for example, a picture preprocessor, and a communication interface (or communication unit) 22.

The picture source 16 may include or be any type of picture capturing device configured to capture a real-world picture, and/or any type of a picture generating device, for example a computer-graphics processor configured to generate a computer animated picture, or any type of device configured to obtain and/or provide a real-world picture, a computer generated picture (for example, screen content, a virtual reality (virtual reality, VR) picture) and/or any combination thereof (for example, an augmented reality (augmented reality, AR) picture). The picture source may be any type of memory or storage storing any foregoing picture.

In distinction to the preprocessor (or preprocessing unit) 18 and processing performed by the preprocessor 18, the picture (or picture data) 17 may also be referred to as a raw picture (or raw picture data) 17.

The preprocessor 18 is configured to: receive the raw picture data 17, and perform preprocessing on the raw picture data 17 to obtain a preprocessed picture (or preprocessed picture data) 19. For example, preprocessing performed by the preprocessor 18 may include trimming, color format conversion (for example, from RGB to YCbCr), color correction, or de-noising. It may be understood that the preprocessing unit 18 may be an optional component.

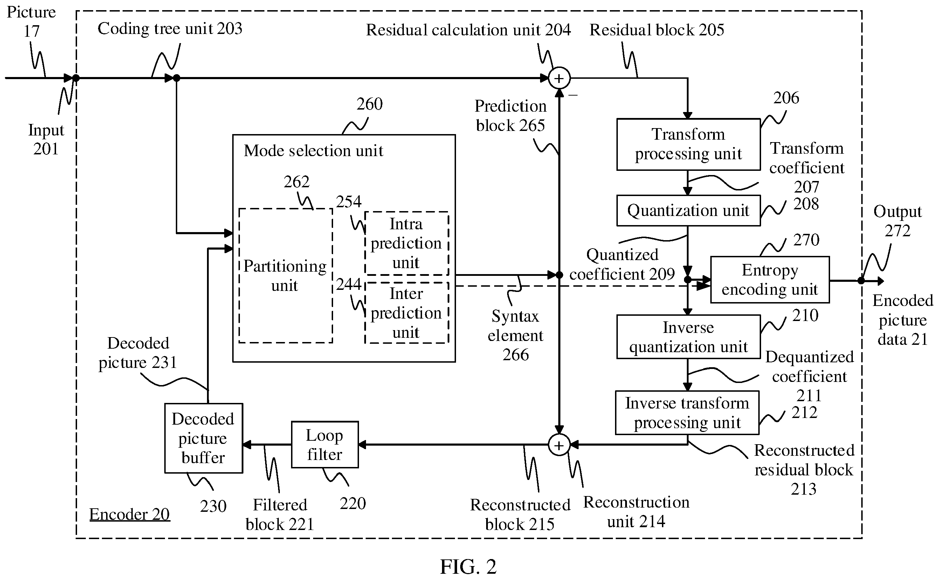

The video encoder (or encoder) 20 is configured to: receive the preprocessed picture data 19, and provide encoded picture data 21 (further details are described below, for example, based on FIG. 2).

The communication interface 22 of the source device 12 may be configured to: receive the encoded picture data 21, and transmit the encoded picture data 21 (or any further processed version thereof) over a communication channel 13 to another device such as the destination device 14 or any other device for storage or direct reconstruction.

The destination device 14 includes the decoder 30, and may additionally or optionally include a communication interface (or communication unit) 28, a post-processor (or post-processing unit) 32, and a display device 34.

The communication interface 28 of the destination device 14 is configured to: receive the encoded picture data 21 (or any further processed version thereof) directly from the source device 12 or from any other source device such as a storage device, for example, an encoded picture data storage device, and provide the encoded picture data 21 for the decoder 30.

The communication interface 22 and the communication interface 28 may be configured to transmit or receive the encoded picture data (or encoded data) 21 via a direct communication link between the source device 12 and the destination device 14, for example, a direct wired or wireless connection, or via any type of network, for example, a wired or wireless network or any combination thereof, or any type of private and public network, or any type of combination thereof.

The communication interface 22 may be, for example, configured to: package the encoded picture data 21 into an appropriate format, for example, a packet, and/or process the encoded picture data by using any type of transmission encoding or processing for transmission over a communication link or communication network.

The communication interface 28 corresponds to the communication interface 22, and for example, may be configured to: receive transmission data, and process the transmission data by using any type of corresponding transmission decoding or processing and/or decapsulation, to obtain the encoded picture data 21.

Both the communication interface 22 and the communication interface 28 may be configured as unidirectional communication interfaces as indicated by the arrow for the communication channel 13 in FIG. 1A pointing from the source device 12 to the destination device 14, or bi-directional communication interfaces, and may be configured to: send and receive a message, to set up a connection, and acknowledge and exchange any other information related to the communication link and/or data transmission, for example, encoded picture data transmission.

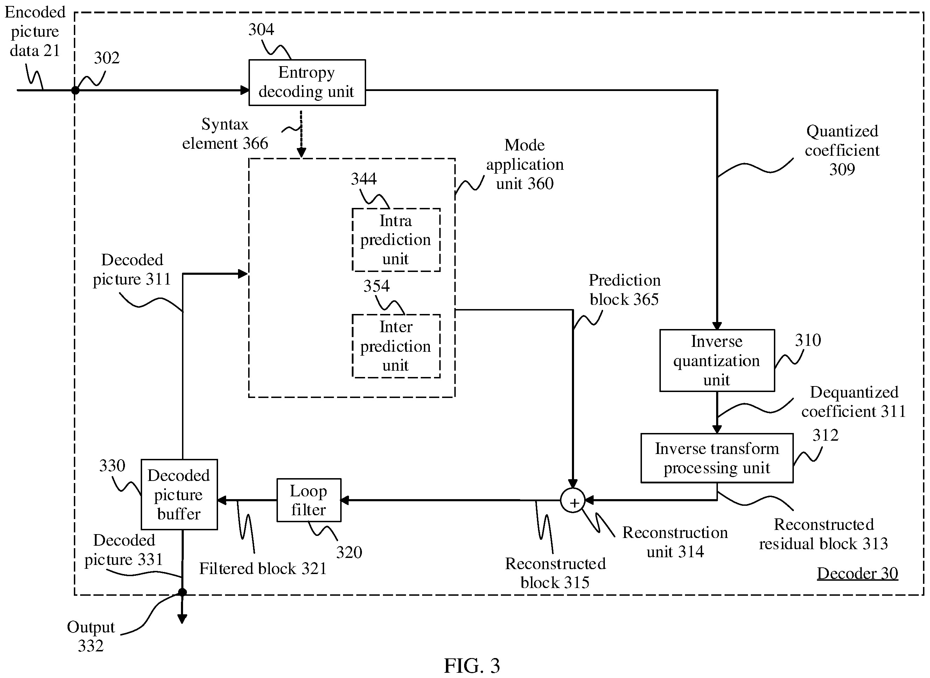

The video decoder (or decoder) 30 is configured to: receive the encoded picture data 21, and provide decoded picture data (or decoded picture data) 31 (further details will be described below based on FIG. 3).

The post-processor 32 is configured to perform post-processing on the decoded picture data 31 (also referred to as reconstructed picture data) such as a decoded picture, to obtain post-processed picture data 33 such as a post-processed picture. Post-processing performed by the post-processing unit 32 may include, for example, color format conversion (for example, from YCbCr to RGB), color correction, trimming, or resampling, or any other processing for generating the decoded picture data 31 that is displayed by the display device 34.

The display device 34 is configured to receive the post-processed picture data 33, to display a picture to a user, a viewer, or the like. The display device 34 may be or may include any type of display, for example, an integrated or external display screen or display, configured to display a reconstructed picture. For example, the display screen may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS), a digital light processor (digital light processor, DLP), or any type of another display screen.

Although FIG. 1A shows the source device 12 and the destination device 14 as independent devices, the device embodiments may alternatively include both the source device 12 and the destination device 14, or include functions of both the source device 12 and the destination device 14, that is, including both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

Based on the description, existence and (accurate) division of different units or functions of the source device 12 and/or the destination device 14 shown in FIG. 1A may vary with actual devices and applications. This is obvious to a person skilled in the art.

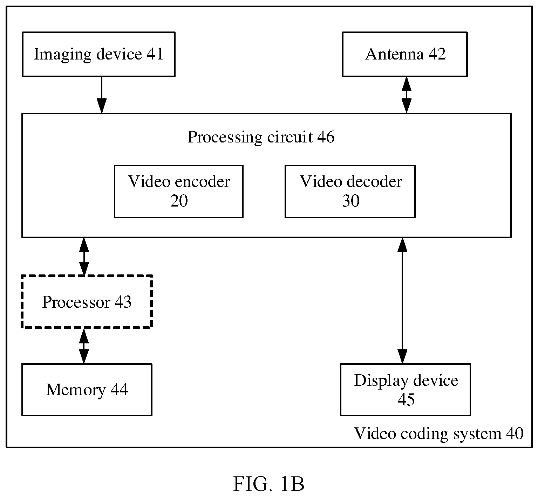

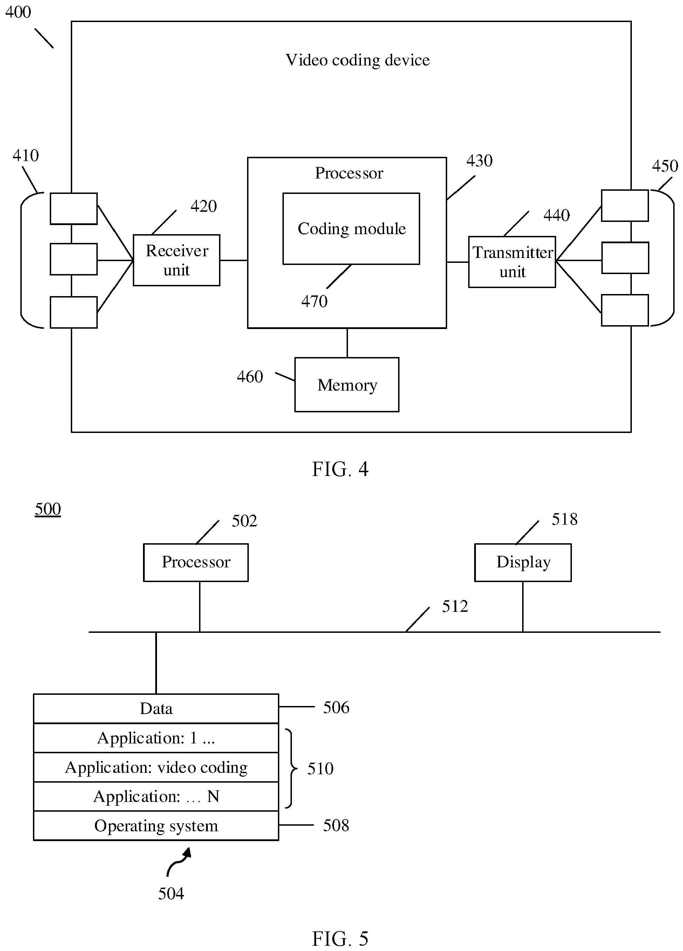

The encoder 20 (for example, the video encoder 20), the decoder 30 (for example, the video decoder 30), or both the encoder and the decoder may be implemented by using a processing circuit shown in FIG. 1B, for example, one or more microprocessors, a digital signal processor (digital signal processor, DSP), an application-specific integrated circuit (application-specific integrated circuit, ASIC), a field programmable gate array (field programmable gate array, FPGA), discrete logic, hardware, a dedicated processor for video encoding, or any combination thereof. The encoder 20 may be implemented by using a processing circuit 46, to include various modules described with reference to the encoder 20 in FIG. 2 and/or any other decoder system or subsystem described in the specification. The decoder 30 may be implemented by using the processing circuit 46, to include various modules described with reference to the decoder 30 in FIG. 3 and/or any other decoder system or subsystem described in the specification. The processing circuit 46 may be configured to perform various operations in the following. As shown in FIG. 5, if some technologies are implemented by using software, the device may store instructions of the software in an appropriate non-transitory computer-readable storage medium, and execute the instructions in hardware by using one or more processors, to perform the technologies in embodiments of the present invention. As shown in FIG. 1B, one of the video encoder 20 and the video decoder 30 may be integrated into a single device as a portion of a combined encoder/decoder (encoder/decoder, CODEC).

The source device 12 and the destination device 14 may include any one of various devices, including any type of handheld device or fixed device, for example, a notebook or a laptop computer, a mobile phone, a smartphone, a tablet or a tablet computer, a camera, a desktop computer, a set-top box, a television, a display device, a digital media player, a video game console, a video stream device (for example, a content service server or a content distribution server), a broadcast receiving device, a broadcast transmitting device, and the like, and may not use or may use any type of operating system. In some cases, the source device 12 and the destination device 14 may be equipped with components for wireless communication. Therefore, the source device 12 and the destination device 14 may be wireless communication devices.

In some cases, the video coding system 10 shown in FIG. 1A is merely an example. The technologies provided in embodiments of the present invention are applicable to video coding setting (for example, video encoding or video decoding), and the setting does not necessarily include any data communication between an encoding device and a decoding device. In another example, data is retrieved from a local memory, and sent over a network. The video encoding device may encode the data and store the data in the memory, and/or the video decoding device may retrieve the data from the memory and decode the data. In some examples, encoding and decoding are performed by devices that do not communicate with each other but encode data to the memory and/or retrieve data from the memory and decode the data.

FIG. 1B is an example block diagram of a video coding system 40 according to an embodiment of the present invention. As shown in FIG. 1B, the video coding system 40 may include an imaging device 41, a video encoder 20, a video decoder 30 (and/or a video encoder/decoder implemented by the processing circuit 46), an antenna 42, one or more processors 43, one or more memory memories 44, and/or a display device 45.

As shown in FIG. 1B, the imaging device 41, the antenna 42, the processing circuit 46, the video encoder 20, the video decoder 30, the processor 43, the memory 44, and/or the display device 45 can communicate with each other. In different examples, the video coding system 40 may include only the video encoder 20 or only the video decoder 30.

In some examples, the antenna 42 may be configured to transmit or receive an encoded bitstream of video data. In addition, in some examples, the display device 45 may be configured to present video data. The processing circuit 46 may include application-specific integrated circuit (application-specific integrated circuit, ASIC) logic, a graphics processor, a general-purpose processor, and the like. The video coding system 40 may also include the optional processor 43. Similarly, the optional processor 43 may include application-specific integrated circuit (application-specific integrated circuit, ASIC) logic, a graphics processor, a general-purpose processor, and the like. In addition, the memory 44 may be any type of memory, for example, a volatile memory (for example, a static random access memory (static random access memory, SRAM), or a dynamic random access memory (dynamic random access memory, DRAM)), or a non-volatile memory (for example, a flash memory). In a non-limiting example, the memory 44 may be implemented by using a cache memory. In another example, the processing circuit 46 may include a memory (for example, a cache) configured to implement a picture buffer.

In some examples, the video encoder 20 implemented by using a logic circuit may include a picture buffer (for example, implemented by using the processing circuit 46 or the memory 44) and a graphics processing unit (for example, implemented by using the processing circuit 46). The graphics processing unit may be communicatively coupled to the picture buffer. The graphics processing unit may include the video encoder 20 implemented by using the processing circuit 46, to implement the video encoder 20 shown in FIG. 2 and/or various modules described with reference to any other encoder system or subsystem described in the specification. The logic circuit may be configured to perform various operations in the specification.

In some examples, the video decoder 30 may be implemented by using the processing circuit 46 in a similar manner, to implement the video decoder 30 shown in FIG. 3 and/or various modules described with reference to any other decoder system or subsystem described in the specification. In some examples, the video decoder 30 implemented by using the logic circuit may include a picture buffer (for example, implemented by using the processing circuit 46 or the memory 44) and a graphics processing unit (for example, implemented by using the processing circuit 46). The graphics processing unit may be communicatively coupled to the picture buffer. The graphics processing unit may include the video decoder 30 implemented by using the processing circuit 46, to implement the video decoder 30 shown in FIG. 3 and/or various modules described with reference to any other decoder system or subsystem described in the specification.

In some examples, the antenna 42 may be configured to receive an encoded bitstream of video data. As described above, the encoded bitstream may include data, an indicator, an index value, mode selection data, and the like described in the specification, for example, data (for example, a transform coefficient or a quantized transform coefficient, the (described) optional indicator, and/or data defining encoding partition) related to encoding partition, that are related to video frame encoding. The video coding system 40 may also include the video decoder 30 that is coupled to the antenna 42 and that is configured to decode the encoded bitstream. The display device 45 is configured to present a video frame.

It should be understood that, for the example described with reference to the video encoder 20 in this embodiment of the present invention, the video decoder 30 may be configured to perform a reverse process. For a signaling syntax element, the video decoder 30 may be configured to: receive and parse the syntax element, and decode related video data correspondingly. In some examples, the video encoder 20 may perform entropy encoding on the syntax element, to obtain an encoded video bitstream. In the example, the video decoder 30 may parse the syntax element, and decode related video data correspondingly.

For ease of description, refer to versatile video coding (versatile video coding, VVC) reference software or high-efficiency video coding (high-efficiency video coding, HEVC) developed by the joint collaboration team on video coding (joint collaboration team on video coding, JCT-VC) of the ITU-T video coding experts group (video coding experts group, VCEG) and the ISO/IEC motion picture experts group (motion picture experts group, MPEG), to describe embodiments of the present invention. A person of ordinary skill in the art understands that embodiments of the present invention are not limited to the HEVC or the VVC.

### Encoder and encoding method

FIG. 2 is an example block diagram of a video encoder 20 according to an embodiment of the present invention. As shown in FIG. 2, the video encoder 20 includes an input 201 (or input interface), a residual calculation unit 204, a transform processing unit 206, a quantization unit 208, an inverse quantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output 272 (or output interface). The mode selection unit 260 may include an inter prediction unit 244, an intra prediction unit 254, and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video encoder/decoder.

The residual calculation unit 204, the transform processing unit 206, the quantization unit 208, and the mode selection unit 260 may be referred to as forming a forward signal path of the encoder 20, where the inverse quantization unit 210, the inverse transform processing unit 212, the reconstruction unit 214, the buffer 216, the loop filter 220, the decoded picture buffer (decoded picture buffer, DPB) 230, the inter prediction unit 244, and the intra prediction unit 254 may be referred to as forming a backward signal path of the encoder, where the backward signal path of the encoder 20 corresponds to a signal path of a decoder (refer to the decoder 30 in FIG. 3). The inverse quantization unit 210, the inverse transform processing unit 212, the reconstruction unit 214, the loop filter 220, the decoded picture buffer 230, the inter prediction unit 244, and the intra prediction unit 254 also form a "built-in decoder" of the video encoder 20.

### Pictures and picture partitioning (Pictures and blocks)

The encoder 20 may be configured to receive, for example, via the input 201, a picture (or picture data) 17, for example, a picture in a sequence of pictures forming a video or video sequence. The received picture or picture data may also be a preprocessed picture (or preprocessed picture data) 19. For ease of simplicity, the following description refers to the picture 17. The picture 17 may also be referred to as a current picture or a to-be-encoded picture (especially when the current picture is distinguished from another picture in video coding, for example, a previous encoded picture and/or a decoded picture in a same video sequence, that is, a video sequence that also includes the current picture).

A (digital) picture is or may be regarded as a two-dimensional array or matrix of samples with intensity values. A sample in the array may also be referred to as a pixel (pixel or pel) (a short form of a picture element). A quantity of samples in horizontal and vertical directions (or axes) of the array or picture defines a size and/or resolution of the picture. For representation of color, three color components are usually employed. To be specific, the picture may be represented as or include three sample arrays. In an RBG format or color space, a picture includes corresponding red, green and blue sample arrays. However, in video coding, each pixel is usually represented in a luminance or chrominance format or color space, for example, YCbCr, which includes a luminance component indicated by Y (sometimes also L is used instead) and two chrominance components indicated by Cb and Cr. The luminance (luma) component Y represents brightness or gray level intensity (for example, the two are the same in a gray-scale picture), while the two chrominance (chrominance, chroma for short) components Cb and Cr represent chrominance or color information components. Correspondingly, the picture in a YCbCr format includes a luminance sample array of luminance sample values (Y), and two chrominance sample arrays of chrominance values (Cb and Cr). A picture in the RGB format may be converted or transformed into the YCbCr format and vice versa, and the process is also known as color transformation or conversion. If a picture is monochrome, the picture may include only a luminance sample array. Correspondingly, a picture may be, for example, an array of luminance samples in a monochrome format, or an array of luminance samples and two corresponding arrays of chrominance samples in 4:2:0, 4:2:2, and 4:4:4 colour formats.

An embodiment of the video encoder 20 may include a picture partitioning unit (not shown in FIG. 2) configured to partition the picture 17 into a plurality of (usually non-overlapping) picture blocks 203. These blocks may also be referred to as root blocks, macro blocks (H.264/AVC), or coding tree blocks (Coding Tree Block, CTB) or coding tree units (Coding Tree Unit, CTU) in the H.265/HEVC and VVC standards. The partitioning unit may be configured to: use a same block size for all pictures of a video sequence and a corresponding grid defining the block size; or change the block size between pictures, subsets, or groups of pictures, and partition each picture into corresponding blocks.

In another embodiment, the video encoder may be configured to receive directly a block 203 of the picture 17, for example, one, several or all blocks forming the picture 17. The picture block 203 may also be referred to as a current picture block or a to-be-coded picture block.

Like the picture 17, the picture block 203 again is or may be regarded as a two-dimensional array or matrix of samples with intensity values (sample values), although of smaller dimension than the picture 17. In other words, the block 203 may include, for example, one sample array (for example, a luminance array in a case of a monochrome picture 17, or a luminance or chrominance array in a case of a color picture), three sample arrays (for example, one luminance array and two chrominance arrays in a case of a color picture 17), or any other quantity and/or type of arrays depending on a color format applied. A quantity of samples in horizontal and vertical directions (or axes) of the block 203 define a size of block 203. Correspondingly, a block may be, for example, an array of MxN (M columns x N rows) samples or an array of MxN transform coefficients.

In an embodiment, the video encoder 20 shown in FIG. 2 may be configured to encode the picture 17 block by block, for example, perform encoding and prediction on and for each block 203.

In an embodiment, the video encoder 20 shown in FIG. 2 may be further configured to partition and/or encode the picture by using a slice (also referred to as a video slice), where the picture may be partitioned into or encoded by using one or more slices (usually non-overlapping). Each slice may include one or more blocks (for example, coding tree units CTUs) or one or more groups of blocks (for example, tiles (tiles) in the H.265/HEVC/VVC standard or bricks (bricks) in the VVC standard).

In an embodiment, the video encoder 20 shown in FIG. 2 may be further configured to partition and/or encode the picture by using slices/tile groups (also referred to as video tile groups) and/or tiles (also referred to as video tiles), where the picture may be partitioned into or encoded by using one or more slices/tile groups (usually non-overlapping), and each slice/tile group may include one or more blocks (for example, CTUs) or one or more tiles. Each tile may be of a rectangular shape and may include one or more complete or fractional blocks (for example, CTUs).

### Residual calculation

The residual calculation unit 204 is configured to calculate a residual block 205 based on the picture block 203 and a prediction block 265 (further details about the prediction block 265 are provided subsequently), for example, by subtracting sample values of the prediction block 265 from sample values of the picture block 203, sample by sample (pixel by pixel) to obtain the residual block 205 in a pixel domain.

### Transform

The transform processing unit 206 is configured to apply a discrete cosine transform (discrete cosine transform, DCT) or discrete sine transform (discrete sine transform, DST), on the sample values of the residual block 205 to obtain transform coefficients 207 in a transform domain. The transform coefficients 207 may also be referred to as transform residual coefficients, and represent the residual block 205 in the transform domain.

The transform processing unit 206 may be configured to apply integer approximations of DCT/DST, such as transforms specified in HEVC/H.265. Compared with an orthogonal DCT transform, such integer approximations are usually scaled based on a factor. To preserve a norm of a residual block which is processed by using forward and inverse transforms, applying an additional scaling factor is a part of a transform process. The scaling factor is usually selected based on some constraints, for example, the scaling factor is a power of two for a shift operation, a bit depth of the transform coefficient, and a tradeoff between accuracy and implementation costs. A specific scaling factor is, for example, specified for an inverse transform, for example, by the inverse transform processing unit 212 on the encoder side 20 (and the corresponding inverse transform, for example, by the inverse transform processing unit 312 on the decoder side 30), and a corresponding scaling factor for the forward transform, for example, by the transform processing unit 206 on the encoder side 20 may be specified correspondingly.

In an embodiment, the video encoder 20 (correspondingly, the transform processing unit 206) may be configured to output transform parameters, for example, one or more types of transforms, for example, directly output the transform parameters or output the transform parameters after the transform parameters are encoded or compressed via the entropy encoding unit 270, so that, for example, the video decoder 30 may receive and use the transform parameters for decoding.

### Quantization

The quantization unit 208 is configured to quantize the transform coefficients 207 to obtain quantized transform coefficients 209, for example, by applying scalar quantization or vector quantization. The quantized transform coefficient 209 may also be referred to as a quantized residual coefficient 209.

A quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for scalar quantization, different scales may be applied to achieve finer or coarser quantization. A smaller quantization step size corresponds to finer quantization, and a larger quantization step size corresponds to coarser quantization. An appropriate quantization step size may be indicated by a quantization parameter (quantization parameter, QP). For example, the quantization parameter may be an index to a predefined set of appropriate quantization step sizes. For example, a smaller quantization parameter may correspond to finer quantization (a smaller quantization step size) and a larger quantization parameter may correspond to coarser quantization (a larger quantization step size), or vice versa. The quantization may include division by a quantization step size, and a corresponding or inverse dequantization, for example, by the inverse quantization unit 210, may include multiplication by the quantization step size. Embodiments according to some standards such as HEVC, may be used to use a quantization parameter to determine a quantization step size. Generally, a quantization step size may be calculated based on a quantization parameter by using a fixed point approximation of an equation including division. Additional scaling factors may be introduced for quantization and dequantization to restore the norm of the residual block, where the norm of the residual block may be modified because of a scale used in the fixed point approximation of the equation for the quantization step size and the quantization parameter In one example implementation, scales of the inverse transform and dequantization may be combined. Alternatively, customized quantization tables may be used and indicated from an encoder to a decoder, for example, in a bitstream. The quantization is a lossy operation, where a loss increases with increasing of the quantization step size.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded by the entropy encoding unit 270, so that, for example, the video decoder 30 may receive and apply the quantization parameter for decoding.

### Inverse quantization

The inverse quantization unit 210 is configured to apply inverse quantization of the quantization unit 208 on the quantized coefficients to obtain dequantized coefficients 211, for example, by applying the inverse of a quantization scheme applied by the quantization unit 208 based on or by using a same quantization step size as the quantization unit 208. The dequantized coefficients 211 may also be referred to as dequantized residual coefficients 211, and correspond, although usually not identical to the transform coefficients due to a loss by caused by quantization, to the transform coefficients 207.

### Inverse transform

The inverse transform processing unit 212 is configured to apply the inverse transform of the transform applied by the transform processing unit 206, for example, an inverse discrete cosine transform (discrete cosine transform, DCT) or inverse discrete sine transform (discrete sine transform, DST), to obtain a reconstructed residual block 213 (or corresponding dequantized coefficients 213) in the pixel domain. The reconstructed residual block 213 may also be referred to as a transform block 213.

### Reconstruction

The reconstruction unit 214 (for example, a summer 214) is configured to add the transform block 213 (for example, the reconstructed residual block 213) to the prediction block 265 to obtain a reconstructed block 215 in the pixel domain, for example, by adding the sample values of the reconstructed residual block 213 and the sample values of the prediction block 265.

### Filtering

The loop filter unit 220 (or "loop filter" 220 for short), is configured to filter the reconstructed block 215 to obtain a filtered block 221, or usually to filter reconstructed samples to obtain filtered sample values. For example, the loop filter unit is configured to: smooth pixel transitions, or otherwise improve video quality. The loop filter unit 220 may include one or more loop filters such as a de-blocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter and an ALF filter. An order of a filtering process may be the deblocking filter, the SAO filter, and the ALF filter. For still another example, a process called luma mapping with chroma scaling (luma mapping with chroma scaling, LMCS) (namely, an adaptive in-loop reshaper) is added. This process is performed before deblocking. For still another example, the deblocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 220 shown in FIG. 2 is a loop filter, in another configuration, the loop filter unit 220 may be implemented as a post loop filter. The filtered block 221 may also be referred to as a filtered reconstructed block 221.

In an embodiment, the video encoder 20 (correspondingly, the loop filter unit 220) may be configured to output loop filter parameters (such as SAO filter parameters, ALF filter parameters, or LMCS parameters), for example, directly output the loop filter parameters or output the loop filter parameters after the loop filter parameters are encoded by the entropy encoding unit 270, so that, for example, the decoder 30 may receive and apply same loop filter parameters or different loop filters for decoding.

### Decoded picture buffer

The decoded picture buffer (decoded picture buffer, DPB) 230 may be a reference picture memory that stores reference picture data for use in encoding video data by the video encoder 20. The DPB 230 may be formed by any of a variety of storage devices such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or another type of storage device. The decoded picture buffer 230 may be configured to store one or more filtered blocks 221. The decoded picture buffer 230 may be further configured to store other previously filtered blocks, for example, previously reconstructed and filtered blocks 221, of a same current picture or of different pictures, for example, previously reconstructed pictures, and may provide complete previously reconstructed decoded pictures (and corresponding reference blocks and samples) and/or a partially reconstructed current picture (and corresponding reference blocks and samples), for example for inter prediction. The decoded picture buffer 230 may be also configured to store one or more unfiltered reconstructed blocks 215, or usually unfiltered reconstructed samples, for example the reconstructed block 215 that is not filtered by the loop filter unit 220, or any other version of the reconstructed blocks or samples that are not further processed.

### Mode selection (Partitioning and prediction)

The mode selection unit 260 includes the partitioning unit 262, the inter prediction unit 244, and the intra prediction unit 254, and is configured to receive or obtain original picture data, for example, an original block 203 (the current block 203 of the current picture 17), and reconstructed picture data, for example, filtered and/or unfiltered reconstructed samples or blocks of the same (current) picture and/or from one or a plurality of previously decoded pictures, for example, from the decoded picture buffer 230 or another buffer (for example, a line buffer, not shown in the figure). The reconstructed picture data is used as reference picture data for prediction such as inter prediction or intra prediction, to obtain the prediction block 265 or prediction value 265.

The mode selection unit 260 may be configured to: determine or select partitioning for a current block (including no partitioning) prediction mode (for example, an intra or inter prediction mode), and generate the corresponding prediction block 265, which is used for the calculation of the residual block 205 and for the reconstruction of the reconstructed block 215.

In an embodiment, the mode selection unit 260 may be configured to select the partitioning mode and the prediction mode (for example, from those supported by or available for the mode selection unit 260), which provide best match or in other words a minimum residual (the minimum residual means better compression for transmission or storage), or minimum signaling overheads (the minimum signaling overheads mean better compression for transmission or storage), or which considers or balances both. The mode selection unit 260 may be configured to determine the partitioning mode and the prediction mode based on rate distortion optimization (rate distortion Optimization, RDO), that is, select the prediction mode which provides a minimum rate distortion. The terms "best", "lowest", "optimal" in the specification do not necessarily mean "best", "lowest", "optimal" in general, but may also refer to situations where termination or selection criteria are met. For example, a value that exceeds or falls below a threshold or another limit may result in "suboptimal selection", but reduce complexity and processing time.

In other words, the partitioning unit 262 may be configured to partition a picture from a video sequence into a sequence of coding tree units (coding tree unit, CTU), and the CTU 203 may be further partitioned into smaller block partitions or sub-blocks (which form again blocks), for example, iteratively by using quad-tree partitioning (quad-tree partitioning, QT), binary-tree partitioning (binary-tree partitioning, BT), triple-tree partitioning (triple-tree partitioning, TT), or any combination thereof, and to perform, for example, prediction for each of the block partitions or sub-blocks, where the mode selection includes selection of the tree-structure of the partitioned block 203 and the prediction modes that are applied to each of the block partitions or sub-blocks.

Partitioning (for example, performed by the partitioning unit 262) and prediction processing (performed by the inter prediction unit 244 and the intra prediction unit 254) performed by the video encoder 20 are explained in more detail in the following.

### Partitioning

The partitioning unit 262 may partition (or split) a coding tree unit 203 into smaller partitions, for example, smaller blocks of a square or rectangular size. For a picture that has three sample arrays, a CTU includes an NxN block of luminance samples and two corresponding blocks of chrominance samples.

In the H.265/HEVC video coding standard, a frame of picture is partitioned into non-overlapping CTUs. A size of the CTU may be set to 64x64 (the size of the CTU may alternatively be set to another value, for example, the size of the CTU in JVET reference software JEM is increased to 128x128 or 256x256). A 64x64 CTU includes a rectangular pixel matrix with 64 columns and 64 pixels per column, and each pixel includes a luminance component or/and a chrominance component.

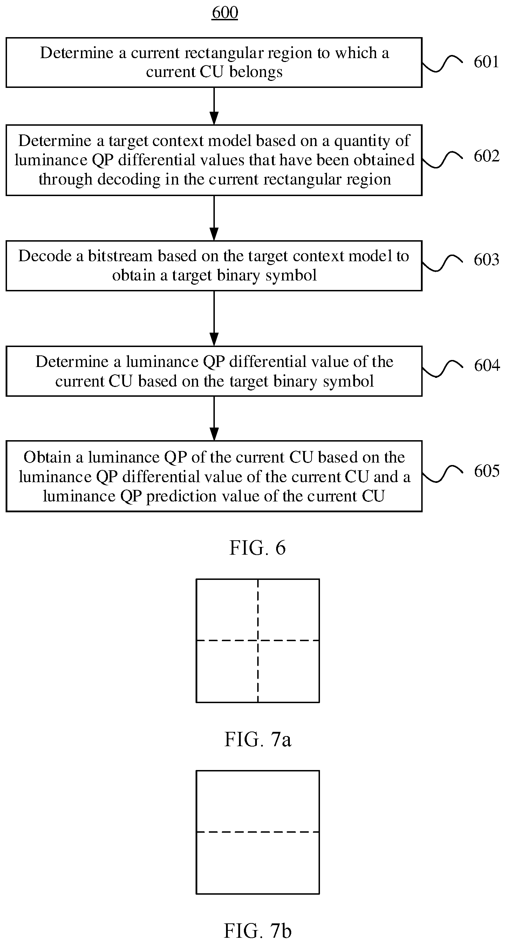

In H.265, a QT-based CTU split method is used, the CTU is used as a root (root) node of the QT, and the CTU is recursively split into several leaf nodes (leaf nodes) in a QT split mode, as shown in FIG. 7a. One node corresponds to one picture region. If a node is not split, the node is referred to as a leaf node, and a picture region corresponding to the node is a CU. If a node is further split, a picture region corresponding to the node is split into four regions of a same size (a length and a width of the four regions are respectively half a length and a width of the original region), and each region corresponds to one node. Whether these nodes are further split needs to be separately determined. Whether to split a node is indicated by a split flag bit split_cu_flag, corresponding to the node, in a bitstream. A node A is split into four nodes Bi for one time, where i=0 to 3. Bi is referred to as a child node of A, and A is referred to as a parent node of Bi. A QT level (qtDepth) of the root node is 0, and a QT level of the node is four QT levels of the parent node of the node plus 1. For brevity of description, in the following, a size and a shape of a node are a size and a shape of a picture region corresponding to the node.

For example, one 64x64 CTU (a QT level of the CTU is 0) becomes one 64x64 CU if the CTU is determined not to be split based on split_cu_flag corresponding to the CTU, and becomes four 32x32 nodes (whose QT levels are 1) if the CTU is determined to be split based on split_cu_flag corresponding to the CTU. Each of the four 32x32 nodes may be further determined to be split or not split based on split_cu_flag corresponding to the node. If one 32x32 node continues to be split, four 16x16 nodes (whose QT levels are 2) are generated. The rest may be deduced by analogy. Until all nodes are not split, one CTU is split into a group of CUs. A minimum size (size) of a CU is identified in a sequence parameter set (sequence parameter set, SPS). For example, 8x8 is the minimum size of the CU. In the foregoing recursive split process, if a size of a node is equal to a minimum CU size (minimum CU size), the node is not further split by default, and a split flag of the node does not need to be included in a bitstream.

After it is learned, through parsing, that a node is a leaf node and the leaf node is a CU, coding information (including information such as a prediction mode and a transform coefficient of the CU, for example, a coding_unit() syntax structure in H.265) corresponding to the CU is further parsed. Then, decoding processing such as prediction, dequantization, inverse transform, and loop filtering is performed on the CU based on the coding information, to generate a reconstructed picture corresponding to the CU. QT split enables the CTU to be split into a group of CUs of appropriate sizes based on a local picture feature. For example, a flat region is split into CUs of large sizes, and a richly textured region is split into CUs of small sizes.

In the H.266/VVC standard, a BT split mode and a TT split mode are added on the basis of the QT split.

In the BT split mode, one node is split into two child nodes. There are two specific BT split modes.
(1) Horizontal binary split: A region corresponding to a node is split into two regions of a same size: an upper region and a lower region. To be specific, widths remain unchanged, and heights are a half of heights of the regions before split, and each region corresponds to one node, for example, as shown in FIG. 7b.
(2) Vertical binary split: A region corresponding to a node is split into two regions of a same size: a left region and a right region. To be specific, heights remain unchanged, and widths are a half of widths of the regions before split, for example, as shown in FIG. 7c.

In the TT split mode, one node is split into three child nodes. There are two specific TT split modes.
(1) Horizontal ternary split: A region corresponding to a node is split into three regions: an upper region, a middle region, and a lower region, where each region after split corresponds to one child node, and heights of the upper region, the middle region, and the lower region are respectively 1/4, 1/2, and 1/4 of heights of the regions before split, for example, as shown in FIG. 7d.
(2) Vertical ternary split: A region corresponding to a node is split into three regions: a left region, a middle region, and a right region, where each region after split corresponds to one child node, and widths of the left region, the middle region, and the right region are respectively 1/4, 1/2, and 1/4 of widths of the regions before split, for example, as shown in FIG. 7e.

In H.266, a split mode cascading a QT and a BT/TT is used, which is referred to as a QT-MTT split mode for short. To be specific, the CTU generates four QT nodes through QT split. The QT node may continue to be split into four QT nodes in the QT split mode, until the QT node is used as a QT leaf node without being further split in the QT split mode. Alternatively, the QT node is not split in the QT split mode, and is used as a QT leaf node. A QT leaf node is used as a root node of an MTT. A node in the MTT may be split into child nodes by using one of the four split modes: horizontal binary split, vertical binary split, horizontal ternary split, and vertical ternary split; or a node in the MTT is one MTT leaf node without being further split. A leaf node of the MTT is a CU.

For example, FIG. 8 is an example schematic diagram of a QT-MTT split mode according to an embodiment of the present invention. As shown in FIG. 8, a CTU is split into 16 CUs by using the QT-MTT: from a to p, and each endpoint in a tree diagram indicates one node. One node is connected to four lines to indicate QT split, one node is connected to two lines to indicate BT split, and one node is connected to three lines to indicate TT split. A solid line indicates the QT split, a dashed line indicates MTT first-layer split, and a dot-dashed line indicates MTT second-layer split, a to p are 16 MTT leaf nodes, and each MTT leaf node corresponds to one CU. Based on the foregoing tree diagram, a split diagram of the CTU in FIG. 8 may be obtained.

In the QT-MTT split mode, each CU has a QT level (or QT depth) (quad-tree depth, QT depth) and an MTT level (MTT depth) (multi-type tree depth, MTT depth). The QT level indicates a QT level of a QT leaf node to which the CU belongs, and the MTT level indicates an MTT level of an MTT leaf node to which the CU belongs. For example, in FIG. 8, a QT level of a, b, c, d, e, f, g, i, or j is 1, and an MTT level is 2; a QT level of h is 1, and an MTT level is 1; a QT level of n, o, or p is 2, and an MTT level is 0; and a QT level of 1 or m is 2, and an MTT level is 1. If the CTU is split into only one CU, a QT level of the CU is 0, and an MTT level is 0.

The AVS3 standard adopts another QT-MTT split method, that is, a split mode cascading a QT and a BT/EQT. In other words, the AVS3 standard uses extended quadtree (extended quadtree, EQT) split to replace the TT split in H.266. To be specific, the CTU generates four QT nodes through QT split. The QT node may continue to be split into four QT nodes in the QT split mode, until the QT node is used as a QT leaf node without being further split in the QT split mode. Alternatively, the QT node is not split in the QT split mode, and is used as a QT leaf node. A QT leaf node is used as a root node of an MTT. A node in the MTT may be split into child nodes by using one of the four split modes: horizontal binary split, vertical binary split, horizontal quaternary split, and vertical quaternary split; or a node in the MTT is one MTT leaf node without being further split. A leaf node of the MTT is a CU.

In the EQT split mode, one node is split into four child nodes. There are two specific EQT split modes.
(1) Horizontal quaternary split: A region corresponding to a node is split into four regions: an upper region, a middle left region, a middle right region, and a lower region, where each region after split corresponds to one child node, heights of the upper region, the middle left region, the middle right region, and the lower region are respectively 1/4, 1/2, 1/2, and 1/4 of heights of the regions before split, and a width of the middle left region and a width of the middle right region are respectively 1/2 and 1/2 of widths of the regions before split, for example, as shown in FIG. 7f.
(2) Vertical quaternary split: A region corresponding to a node is split into four regions: a left region, a middle upper region, a middle lower region, and a right region, where each region after split corresponds to one child node, widths of the left region, the middle upper region, the middle lower region, and the right region are respectively 1/4, 1/2, 1/2, and 1/4 of widths of the regions before split, and a height of the middle upper region and a height of the middle lower region are respectively 1/2 and 1/2 of heights of the regions before split, for example, as shown in FIG. 7g.

In the H.265/HEVC standard, for a picture in a YUV 4:2:0 format, one CTU includes one luminance block and two chrominance blocks. The luminance block and the chrominance block may be split in a same mode, which is referred to as a luminance-chrominance joint coding tree. In VVC, if a current frame is an I-frame, when a CTU is a node of a preset size (for example, 64x64) in an intra-coded frame (I-frame), a luminance block included in the node is split, by a luminance coding tree, into a group of coding units that include only luminance blocks, and a chrominance block included in the node is split, by a chrominance coding tree, into a group of coding units that include only chrominance blocks. Luminance coding tree split and chrominance coding tree split are independent of each other. Coding trees independently used for the luminance block and the chrominance block are referred to as separate trees (separate trees). In H.265, a CU includes a luminance pixel and a chrominance pixel. In standards such as H.266 and AVS3, in addition to having the CU that includes both the luminance pixel and the chrominance pixel, there is also a luminance CU that includes only a luminance pixel and a chrominance CU that includes only a chrominance pixel.

As described above, the video encoder 20 is configured to determine or select the best or an optimum prediction mode from a set of (predetermined) prediction modes. The set of prediction modes may include, for example, intra prediction modes and/or inter prediction modes.

### Intra prediction

A set of intra prediction modes may include 35 different intra prediction modes, for example, non-directional modes such as a DC (or average) mode and a planar mode, or directional modes defined in HEVC, or may include 67 different intra prediction modes, for example, non-directional modes such as a DC (or average) mode and a planar mode, or directional modes defined in VVC. For example, several conventional angular intra prediction modes are adaptively replaced with wide-angle intra prediction modes for non-square blocks defined in VVC. For another example, to avoid division operations for DC prediction, only a longer side is used to compute an average value for a non-square block. In addition, a result of intra prediction of a planar mode may be further modified by using a position-dependent prediction combination (position-dependent prediction combination, PDPC) method.

The intra prediction unit 254 is configured to use reconstructed samples of neighboring blocks of a same current picture to generate the intra prediction block 265 based on an intra prediction mode of the set of intra prediction modes.

The intra prediction unit 254 (or usually the mode selection unit 260) is further configured to output an intra prediction parameter (or usually information indicating the selected intra prediction mode for the block) to the entropy encoding unit 270 in a form of a syntax element 266 for inclusion into the encoded picture data 21, so that, for example, the video decoder 30 may receive and use the prediction parameter for decoding.

### Inter prediction

In a possible implementation, the set of inter prediction modes depends on available reference pictures (that is, previous at least partially decoded pictures, for example, stored in the DBP 230) and another inter prediction parameter, for example, whether the whole reference picture or only a part, for example, a search window region around a region of a current block, of the reference picture is used for searching for a best matching reference block, and/or for example, whether pixel interpolation is applied, for example, half/semi-pel, quarter-pel and/or 1/16 pel interpolation.

In addition to the foregoing prediction modes, a skip mode and/or a direct mode may be applied.

For example, extended merge prediction is used. A merge candidate list of the mode is constructed by including the following five types of candidates in order: a spatial MVP from a spatial neighboring CU, a temporal MVP from a collocated CU, a history-based MVP from an FIFO table, a pairwise average MVP, and zero MVs. A bilateral-matching based decoder side motion vector refinement (decoder side motion vector refinement, DMVR) may be applied to increase accuracy of an MV of a merge mode. A merge mode with MVD (merge mode with MVD, MMVD) comes from a merge mode with a motion vector difference. An MMVD flag is sent immediately after a skip flag and a merge flag are sent, to specify whether a CU uses the MMVD mode. A CU-level adaptive motion vector resolution (adaptive motion vector resolution, AMVR) scheme may be applied. The AMVR supports an MVD of a CU to be coded in different precision. Dependent on a prediction mode for the current CU, an MVD of the current CU may be adaptively selected. When a CU is coded in the merge mode, a combined inter/intra prediction (combined inter/intra prediction, CIIP) mode may be applied to the current CU. Weighted averaging of inter and intra prediction signals is performed to obtain CIIP prediction. For affine motion compensated prediction, an affine motion field of a block is described by using motion information of two control point (4-parameter) or three control point motion vectors (6-parameter). Sub-block-based temporal motion vector prediction (sub-block-based temporal motion vector prediction, SbTMVP) is similar to temporal motion vector prediction (temporal motion vector prediction, TMVP) in HEVC, but predicts a motion vector of a sub-CU within a current CU. Bi-directional optical flow (bi-directional optical flow, BDOF), previously referred to as BIO, is a simple version that requires less computation, especially in terms of quantities of multiplications and a size of a multiplier. In a triangle partition mode, a CU is split evenly into two triangle-shaped parts by using either diagonal split or anti-diagonal split. In addition, a bi-prediction mode is extended beyond simple averaging to allow weighted averaging of two prediction signals.

The inter prediction unit 244 may include a motion estimation (motion estimation, ME) unit and a motion compensation (motion compensation, MC) unit (both not shown in FIG.2). The motion estimation unit may be configured to receive or obtain the picture block 203 (the current picture block 203 of the current picture 17) and a decoded picture 231, or at least one or a plurality of previously reconstructed blocks, for example, reconstructed blocks of one or a plurality of other/different previously decoded pictures 231, for motion estimation. For example, a video sequence may include the current picture and the previously decoded pictures 231, or in other words, the current picture and the previously decoded pictures 231 may be part of or form a sequence of pictures forming a video sequence

For example, the encoder 20 may be configured to: select a reference block from a plurality of reference blocks of a same picture or different pictures of a plurality of other pictures, and provide a reference picture (or reference picture index) and/or an offset (spatial offset) between a location (x, y coordinates) of the reference block and a location of the current block as inter prediction parameters to the motion estimation unit. The offset is also referred to as a motion vector (motion vector, MV).

The motion compensation unit is configured to: obtain, for example, receive, an inter prediction parameter, and perform inter prediction based on or by using the inter prediction parameter to obtain an inter prediction block 246. Motion compensation, performed by the motion compensation unit, may involve fetching or generating the prediction block based on the motion/block vector determined through motion estimation, and may further include performing interpolations to sub-pixel precision. Interpolation filtering may generate a sample of another pixel from a known sample, so that a quantity of candidate prediction blocks that may be used to code a picture block is potentially increased. Upon receiving a motion vector for a PU of the current picture block, the motion compensation unit may locate a prediction block to which the motion vector points in one of reference picture lists.

The motion compensation unit may also generate syntax elements associated with blocks and video slices for use by the video decoder 30 in decoding a picture blocks of the video slice. In addition or as an alternative to slices and respective syntax elements, tile groups and/or tiles and respective syntax elements may be generated or used.

### Entropy coding

The entropy encoding unit 270 is configured to apply, for example, an entropy encoding algorithm or scheme (for example, a variable length coding (variable length coding, VLC) scheme, a context adaptive VLC (context adaptive VLC, CAVLC) scheme, an arithmetic coding scheme, a binarization algorithm, a context adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding, or another entropy coding method or technology) on the quantized coefficients 209, inter prediction parameters, intra prediction parameters, loop filter parameters, and/or other syntax elements to obtain the encoded picture data 21 which may be output via the output 272 in a form of an encoded bitstream 21, so that the video decoder 30 may receive and use the parameters for decoding. The encoded bitstream 21 may be transmitted to the video decoder 30, or stored in a memory for subsequent transmission or retrieval by the video decoder 30.

The CABAC is a common entropy coding (entropy coding) technology, and is used for encoding and decoding processing of syntax element values. CABAC encoding processing mainly includes three steps: (1) convert a binary syntax element into one or more binary bins (bin), where a value of each bin is 0 or 1; (2) determine a probability model of each bin based on context information (for example, coding information in a reconstructed region around a node corresponding to the syntax element), which is usually referred to as a context model; and (3) encode the bin based on a probability value in the context model, and update the probability value in the context model based on the value of the bin. Correspondingly, CABAC decoding processing mainly includes three steps: (1) determine the context model of each bin based on the context information; (2) decode a bitstream of the bin based on the probability value in the context model, and update the probability value in the context model based on the value of the bin; and (3) obtain a value of a corresponding syntax element based on a value of one or more bins obtained through decoding.

During encoding and decoding, a method of obtaining the context model is the same. Usually, if a syntax element has only two values: 0 and 1, the syntax element is referred to as a flag (flag), and is binarized into one bin. A value 0 of the bin corresponds to the value 0 of the syntax element, and a value 1 of the bin corresponds to the value 1 of the syntax element.

Statistically, if a probability that a bin is 1 is closer to 0.5, more bits are required for encoding the bin; and if a probability that a bin is 1 is closer to 0 or 1, fewer bits are required for encoding the bin. If a probability model is selected from a plurality of probability models as the context model based on the context information, a total probability that a bin is 1 may be divided into conditional probabilities that a bin is 1 in a plurality of cases, where each conditional probability may be closer to 0 or 1 in comparison with the total probability, so that fewer encoded bits are required and entropy coding efficiency is improved. However, if a context model is inappropriate selected, the conditional probability may be close to the total probability, and therefore the entropy coding efficiency fails to be improved.

Another structural variation of the video encoder 20 may be configured to encode a video stream. For example, a non-transform based encoder 20 may quantize a residual signal directly without the transform processing unit 206 for some blocks or frames. In another implementation, the encoder 20 may have the quantization unit 208 and the inverse quantization unit 210 combined into a single unit.

### Decoder and decoding method

FIG. 3 is an example block diagram of a video decoder 30 according to an embodiment of the present invention. The video decoder 30 is configured to receive the encoded picture data 21 (for example, encoded bitstream 21), for example, encoded by the encoder 20, to obtain a decoded picture 331. The encoded picture data or bitstream includes information for decoding the encoded picture data, for example, data that represents picture blocks of an encoded video slice (and/or a tile group or a tile) and associated syntax elements.

In the example in FIG. 3, the decoder 30 includes an entropy decoding unit 304, an inverse quantization unit 310, an inverse transform processing unit 312, a reconstruction unit 314 (for example, a summer 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process generally reciprocal to the encoding process described with reference to the video encoder 100 in FIG. 2.

As described in the encoder 20, the inverse quantization unit 210, the inverse transform processing unit 212, the reconstruction unit 214, the loop filter 220, the decoded picture buffer DPB 230, the inter prediction unit 344, and the intra prediction unit 354 also form the "built-in decoder" of the video encoder 20. Correspondingly, the inverse quantization unit 310 may be identical in function to the inverse quantization unit 110, the inverse transform processing unit 312 may be identical in function to the inverse transform processing unit 122, the reconstruction unit 314 may be identical in function to reconstruction unit 214, the loop filter 320 may be identical in function to the loop filter 220, and the decoded picture buffer 330 may be identical in function to the decoded picture buffer 230. Therefore, explanations provided for the respective units and functions of the video encoder 20 apply correspondingly to the respective units and functions of the video decoder 30.

### Entropy decoding

The entropy decoding unit 304 is configured to: parse the bitstream 21 (or usually the encoded picture data 21), and perform entropy decoding on the encoded picture data 21 to obtain a quantized coefficient 309 and/or a decoded coding parameter (not shown in FIG. 3), for example, any or all of an inter prediction parameter (for example, a reference picture index and a motion vector), an intra prediction parameter (for example, an intra prediction mode or an index), a transform parameter, a quantization parameter, a loop filter parameter, and/or another syntax element. The entropy decoding unit 304 maybe configured to apply a decoding algorithm or scheme corresponding to the encoding scheme of the entropy encoding unit 270 of the encoder 20. The entropy decoding unit 304 may be further configured to: provide the inter prediction parameter, the intra prediction parameter, and/or another syntax element to the mode application unit 360, and provide another parameter to another unit of the decoder 30. The video decoder 30 may receive a syntax element at a video slice level and/or a video block level. In addition or as an alternative to slices and respective syntax elements, tile groups and/or tiles and respective syntax elements may be received and/or used.

### Inverse quantization

The inverse quantization unit 310 may be configured to: receive a quantization parameter (quantization parameter, QP) (or usually information related to inverse quantization) and a quantized coefficient from the encoded picture data 21 (for example, through parsing and/or decoding by the entropy decoding unit 304), and to perform, based on the quantization parameter, inverse quantization on the decoded quantized coefficient 309 to obtain a dequantized coefficient 311, which may also be referred to as a transform coefficient 311. The inverse quantization process may include use of a quantization parameter determined by the video encoder 20 for each video block of the video slice to determine a degree of quantization, and similarly, a degree of inverse quantization also needs to be determined.

### Inverse transform

The inverse transform processing unit 312 may be configured to: receive the dequantized coefficient 311, also referred to as the transform coefficient 311, and apply a transform to the dequantized coefficient 311 to obtain the reconstructed residual block 213 in a pixel domain. The reconstructed residual block 213 may also be referred to as a transform block 313. The transform may be an inverse transform, for example, an inverse DCT, an inverse DST, an inverse integer transform, or a conceptually similar inverse transform process. The inverse transform processing unit 312 may be further configured to receive a transform parameter or corresponding information from the encoded picture data 21 (for example, through parsing and/or decoding by the entropy decoding unit 304) to determine the transform to be applied to the dequantized coefficient 311.

### Reconstruction

The reconstruction unit 314 (for example, the summer 314) may be configured to add the reconstructed residual block 313 to the prediction block 365 to obtain a reconstructed block 315 in the pixel domain, for example, by adding a sample value of the reconstructed residual block 313 and a sample value of the prediction block 365.

### Filtering

The loop filter unit 320 (either in or after a coding loop) is configured to filter the reconstructed block 315 to obtain a filtered block 321 to smooth a pixel transition, or improve video quality. The loop filter unit 320 may include one or more loop filters such as a de-blocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter and an ALF filter. An order of a filtering process may be the deblocking filter, the SAO filter, and the ALF filter. For still another example, a process called luma mapping with chroma scaling (luma mapping with chroma scaling, LMCS) (namely, an adaptive in-loop reshaper) is added. This process is performed before deblocking. For still another example, the deblocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 320 shown in FIG. 3 is a loop filter, in another configuration, the loop filter unit 320 may be implemented as a post loop filter.

### Decoded picture buffer

The decoded video block 321 of a picture is then stored in the decoded picture buffer 330, which stores the decoded picture 331 as a reference picture for subsequent motion compensation for another picture and/or for output respectively display.

The decoder 30 is configured to output the decoded picture 311, for example, via the output 312, for presentation or viewing to a user.

### Prediction

The inter prediction unit 344 may be identical to the inter prediction unit 244 (in particular to the motion compensation unit), and the intra prediction unit 354 may be identical to the inter prediction unit 254 in function. Split or partitioning decisions and prediction are performed based on the partitioning and/or prediction parameter or respective information received from the encoded picture data 21 (for example, through parsing and/or decoding by the entropy decoding unit 304). The mode application unit 360 may be configured to perform prediction (intra or inter prediction) for each block based on a reconstructed picture, block or respective sample (filtered or unfiltered) to obtain the prediction block 365.

When the video slice is coded as an intra coded (intra coded, I) slice, the intra prediction unit 354 of the mode application unit 360 is configured to generate the prediction block 365 for a picture block of the current video slice based on an indicated intra prediction mode and data from a previously decoded block of the current picture. When the video picture is coded as an inter coded (for example, B or P) slice, the inter prediction unit 344 (for example, the motion compensation unit) of the mode application unit 360 is configured to generate the prediction block 365 for a video block of the current video slice based on the motion vector and another syntax element received from the entropy decoding unit 304. For inter prediction, prediction blocks may be generated from one of reference pictures within one of the reference picture lists. The video decoder 30 may construct reference frame lists 0 and 1 by using a default construction technology based on the reference picture stored in the DPB 330. A same or similar process may be applied for or by embodiments of tile groups (for example, a video tile group) and/or tiles (for example, a video tile) in addition or alternatively to a slice (for example, the video slice). For example, a video may be coded by using I, P or B tile groups and /or tiles.

The mode application unit 360 is configured to: determine prediction information for a video block of the current video slice by parsing the motion vector and another syntax element, and use the prediction information to generate the prediction block for the current video block being decoded. For example, the mode application unit 360 uses some of received syntax elements to determine a prediction mode (for example, intra or inter prediction) used to code the video block of the video slice, an inter prediction slice type (for example, a B slice, a P slice, or a GPB slice), construction information for one or more of the reference picture lists for the slice, a motion vector for each inter encoded video block of the slice, an inter prediction status for each inter coded video block of the slice, and other information, to decode the video block of the current video slice. A same or similar process may be applied for or by embodiments of tile groups (for example, a video tile group) and/or tiles (for example, a video tile) in addition or alternatively to a slice (for example, the video slice). For example, a video may be coded by using I, P or B tile groups and /or tiles.

In an embodiment, the video decoder 30 shown in FIG. 3 may be configured to partition and/or decode the picture by using a slice (also referred to as a video slice), where the picture may be partitioned into or decoded by using one or more slices (usually non-overlapping). Each slice may include one or more blocks (for example, CTUs) or one or more groups of blocks (for example, tiles in H.265/HEVC/VVC, or bricks in VVC).

In an embodiment, the video decoder 30 shown in FIG. 3 may be configured to partition and/or decode the picture by using a slice/tile group (also referred to as a video tile group) and/or a tile (also referred to as a video tile), where a picture may be partitioned into or decoded by using one or more slices/tile groups (usually non-overlapping), and each slice/tile group may include one or more blocks (for example, CTUs) or one or more tiles. Each tile may be of a rectangular shape, and may include one or more complete or fractional blocks (for example, CTUs).

Another variation of the video decoder 30 may be configured to decode the encoded picture data 21. For example, the decoder 30 may generate an output video stream without the loop filter unit 320. For example, a non-transform based decoder 30 may inverse-quantize a residual signal directly without the inverse transform processing unit 312 for some blocks or frames. In another implementation, the video decoder 30 may have the inverse quantization unit 310 and the inverse transform processing unit 312 combined into a single unit.

It should be understood that, in the encoder 20 and the decoder 30, a processing result of a current step may be further processed and then output to a next step. For example, after interpolation filtering, motion vector derivation, or loop filtering, a further operation, such as clip (clip) or shift (shift), may be performed on a processing result of the interpolation filtering, motion vector derivation, or loop filtering.

It should be noted that further operations may be performed on derived motion vectors (including but not limited to a control point motion vector of an affine mode, sub-block motion vector in affine, planar, ATMVP modes, a temporal motion vector, and the like) of the current block. For example, a value of a motion vector is limited to a predefined range based on a representing bit of the motion vector. If the representing bit of the motion vector is bitDepth, the range is from -2^(bitDepth-1) to 2^(bitDepth-1)-1, where "^" means exponentiation. For example, if bitDepth is set equal to 16, the range is from -32768 to 32767; and if bitDepth is set equal to 18, the range is from -131072 to 131071. For example, the value of the derived motion vector (for example, MVs of four 4x4 sub-blocks within one 8x8 block) is limited. Therefore, a max difference between integer parts of the MVs of the four 4x4 sub-block is no more than N pixels, for example, no more than 1 pixel. Two methods for limiting the motion vector based on bitDepth are provided herein.

Although embodiments of the present invention mainly describe video encoding and decoding, it should be noted that embodiments of the coding system 10, the encoder 20, and the decoder 30 and other embodiments described in the specification may also be used for still picture processing or encoding and decoding, that is, processing or encoding and decoding of a single picture independent of any previous or consecutive picture as in video encoding and decoding. In general, the inter prediction units 244 (encoder) and 344 (decoder) may not be available if picture processing is limited to only a single picture 17. All other functions (also referred to as tools or technologies) of the video encoder 20 and video decoder 30 may equally be used for still picture processing, for example, residual calculation 204/304, transform 206, quantization 208, inverse quantization 210/310, (inverse) transform 212/312, partitioning 262/362, intra prediction 254/354 and/or loop filtering 220/320, and entropy encoding 270 and entropy decoding 304.

FIG. 4 is an example block diagram of a video coding device 400 according to an embodiment of the present invention. The video coding device 400 is suitable for implementing the disclosed embodiments described in the specification. In an embodiment, the video coding device 400 may be a decoder, for example, the video decoder 30 in FIG. 1A, or may be an encoder, for example, the video encoder 20 in FIG. 1A.

The video coding device 400 includes an ingress port 410 (or an input port 410) and a receiver unit (receiver unit, Rx) 420 that are configured to receive data; a processor, logical unit, or central processing unit (central processing unit, CPU) 430 configured to process data; a transmitter unit (transmitter unit, Tx) 440 and an egress port 450 (or an output port 450) that are configured to transmit data; and a memory 460 configured to store data. The video coding device 400 may further include an optical-to-electrical (optical-to-electrical, OE) component and an electrical-to-optical (electrical-to-optical, EO) component that are coupled to the ingress port 410, the receiver unit 420, the transmitter unit 440, and the egress port 450 for egress or ingress of an optical or electrical signal.

The processor 430 is implemented by hardware and software. The processor 430 may be implemented as one or more processor chips, cores (for example, multi-core processors), FPGAs, ASICs, and DSPs. The processor 430 communicates with the ingress port 410, the receiver unit 420, the transmitter unit 440, the egress port 450, and the memory 460. The processor 430 includes a coding module 470. The coding module 470 implements the disclosed embodiments described above. For example, the coding module 470 implements, processes, prepares, or provides various coding operations. Therefore, inclusion of the coding module 470 substantially improves a function of the video coding device 400 and affects switching of the video coding device 400 to a different status. Alternatively, the coding module 470 is implemented by using instructions stored in the memory 460 and executed by the processor 430.

The memory 460 includes one or more disks, tape drives, and solid-state drives and may be used as an over-flow data storage device, to store programs when such programs are selected for execution, and to store instructions and data that are read during program execution. The memory 460 may be volatile and/or non-volatile, and may be a read-only memory (read-only memory, ROM), a random access memory (random access memory, RAM), a ternary content-addressable memory (ternary content-addressable memory, TCAM), and/or a static random-access memory (static random-access memory, SRAM).

FIG. 5 is an example block diagram of an apparatus 500 according to an embodiment of the present invention. The apparatus 500 may be used as either or both of the source device 12 and the destination device 14 in FIG. 1A.

A processor 502 in the apparatus 500 may be a central processing unit. Alternatively, the processor 502 may be any other type of device or a plurality of devices that can manipulate or process information and that are now-existing or hereafter developed. Although the disclosed implementations may be implemented by a single processor such as the processor 502 shown in the figure, advantages in speed and efficiency can be achieved by using more than one processor

In an implementation, a memory 504 in the apparatus 500 can be a read only memory (ROM) device or a random access memory (RAM) device. Any other suitable type of storage device may be used as the memory 504. The memory 504 may include code and data 506 that are accessed by the processor 502 via a bus 512. The memory 504 may further include an operating system 508 and an application program 510, and the application program 510 includes at least one program that allows the processor 502 to perform the method in the specification. For example, the application program 510 may include applications 1 to N, and further include a video coding application that performs the method in the specification.

The apparatus 500 may further include one or more output devices such as a display 518. In an example, the display 518 may be a touch sensitive display that combines a display with a touch sensitive element that may be configured to sense a touch input. The display 518 may be coupled to the processor 502 via the bus 512.

Although the bus 512 in the apparatus 500 is described as a single bus in the specification, the bus 512 may include a plurality of buses. Further, a secondary memory may be directly coupled to another component of the apparatus 500 or may be accessed via a network, and may include a single integrated unit such as a memory card or a plurality of units such as a plurality of memory cards. Therefore, the apparatus 500 may have a variety of configurations.

FIG. 6 is an example flowchart of a quantization parameter decoding method according to an embodiment of the present invention. A process 600 may be performed by the video decoder 30. The process 600 includes a series of steps or operations. It should be understood that the process 600 may be performed in various sequences and/or simultaneously, and is not limited to an execution sequence shown in FIG. 6. It is assumed that a video data stream having a plurality of video frames is being used by the video decoder 30, the process 600 including the following steps is performed for decoding to obtain a luminance QP of a current CU.

A video data format in the quantization parameter decoding method in this embodiment of the present invention may be a YUV 4:2:0 format, a YUV 4:2:2 format, or a YUV 4:4:4 format. This is not specifically limited. In addition, the current CU currently being processed by the video decoder may be one of a plurality of leaf nodes included in a CTU currently being processed by the video decoder. A CTU split mode may be a QT split mode in the H.265 standard, a QT-BT/TT split mode in the H.266 standard, or a QT-BT/EQT split mode in the AVS3 standard. This is not specifically limited in this embodiment of the present invention. A size of the CTU may be, for example, 128x128.

Step 601: Determine a current rectangular region to which the current CU belongs.

Corresponding to an encoding side, a decoding side may sequentially decode bitstreams according to a preset decoding order (corresponding to an encoding order) to obtain respective encoding information of a plurality of CUs included in the CTU. In the decoding process, a CU that is decoding the bitstream to determine encoding information of the CU is the current CU.

In the process of decoding the bitstream, the decoder may determine, based on a syntax element carried in the bitstream, a split mode of a currently processed CTU. After splitting the CTU in the split mode, the decoder determines, based on syntax elements of coding tree nodes obtained through split, whether to continue to split the coding tree nodes, and split modes of the coding tree nodes, and the like. In the foregoing process, for each coding tree node, the decoder may determine whether a rectangular region corresponding to the coding tree node may be determined as one rectangular region of the CTU.

In a possible implementation, that the rectangular region corresponding to the coding tree node is determined as one rectangular region of the CTU needs to meet a preset condition, and the preset condition may include the following:
(1) An area of the rectangular region corresponding to the coding tree node is equal to twice a set area, and the rectangular region is split into three coding tree nodes in a triple tree split mode.
   The set area limits the area of the rectangular region, and the decoder compares the area of the rectangular region corresponding to the coding tree node with the set area. If the area of the rectangular region corresponding to the coding tree node is twice the set area, the coding tree node is split into the three coding tree nodes in the TT split mode. For example, as shown in FIG. 7d and FIG. 7e, if the area of the rectangular region corresponding to the coding tree node is twice the set area, the coding tree node is split into the three coding tree nodes in the TT split mode. Therefore, the rectangular region corresponding to the coding tree node meets the preset condition, and may be determined as one rectangular region of the CTU. In addition, after the coding tree node is split in the TT split mode, although an area of a middle region of the coding tree node is equal to the set area, the middle region of the coding tree node is not determined as one rectangular region of the CTU.
(2) An area of the rectangular region corresponding to the coding tree node is equal to a set area, and the rectangular region is split into at least two coding tree nodes.

The set area limits the area of the rectangular region, and the decoder compares the area of the rectangular region corresponding to the coding tree node with the set area. If the area of the rectangular region corresponding to the coding tree node is equal to the set area, and the coding tree node is split into the at least two coding tree nodes, for example, a split flag bit split_cu_flag of the coding tree node indicates that the coding tree node is continued to be split, the coding tree node is determined as one rectangular region of the CTU. For example, as shown in FIG. 8, the set area is 1/4 of the CTU, and an area of a rectangular region corresponding to a coding tree node that includes h, i, and j and that is at an upper left corner of the CTU is 1/4 of the CTU. In addition, the coding tree node is split into three coding tree nodes: h, i, and j. Therefore, the rectangular region corresponding to the coding tree node meets the preset condition, and may be determined as one rectangular region of the CTU.

In the foregoing two conditions (1) and (2), a shape of the rectangular region is not specifically limited. To be specific, the rectangular region may be a rectangular region or a square region. In a possible implementation, if the condition (2) is met, the shape of the rectangular region may be further defined as a square. For this case, refer to a quantization group (quantization group, QG) in the H.265/HEVC standard. One QG corresponds to an NxN region in a picture.

In this embodiment of the present invention, the plurality of rectangular regions included in the CTU may separately meet the foregoing condition (1) or (2), but it is not limited that all the rectangular regions included in the CTU meet a same condition.

Optionally, a syntax element cu_qp_group_size_log2_minus3 may indicate a set area (CuQpGroupAreaSize), where the syntax element cu_qp_group_size_log2_minus3 may be a 2-bit (bit) unsigned positive number, and a value range of the syntax element cu_qp_group_size_log2_minus3 may be from 0 to 3. The set area meets a condition: CuQpGroupAreaSize=1<<(cu_qp_group_size_log2_minus3+3).

Optionally, one syntax element may indirectly indicate the set area with reference to the size of the CTU. For example, in the H.265/HEVC standard, a syntax element diff_cu_qp_delta_depth is transmitted in a PPS, and an NxN rectangular region is derived from the syntax element, which is referred to as a QG in the H.265 standard, where N=CTUSize>>diff_cu_qp_delta_depth, and CTUSize is a side length of the CTU. For example, if CTUSize=64 and diff_cu_qp_delta_depth=2, N=16 may be obtained, and a corresponding set area is 256.

The set area may be transmitted in the bitstream. For example, the set area may be transmitted in a high-layer syntax structure such as a sequence header, a picture header, a slice header, or a picture parameter set (picture parameter set, PPS).

In this embodiment of the present invention, the current rectangular region to which the current CU belongs may be determined based on a location relationship between samples included in a picture region corresponding to the current CU and the rectangular regions included in the CTU.

In a possible implementation, a rectangular region including all samples included in the picture region corresponding to the current CU is determined as the current rectangular region to which the current CU belongs. To be specific, in the plurality of rectangular regions included in the CTU, when locations of all the samples included in the picture region corresponding to the current CU are located in one rectangular region, the rectangular region is the current rectangular region to which the current CU belongs.

In a possible implementation, a rectangular region including a specific sample in all samples included in the picture region corresponding to the current CU is determined as the current rectangular region to which the current CU belongs. In this embodiment of the present invention, the current rectangular region to which the current CU belongs may be determined in any one of the following manners:
(1) determining a rectangular region that is in the plurality of rectangular regions and that includes the upper left corner of the current CU as the current rectangular region;
(2) determining a rectangular region that is in the plurality of rectangular regions and that includes a lower right corner of the current CU as the current rectangular region; or
(3) determining a rectangular region that is in the plurality of rectangular regions and that includes a center point of the current CU as the current rectangular region.

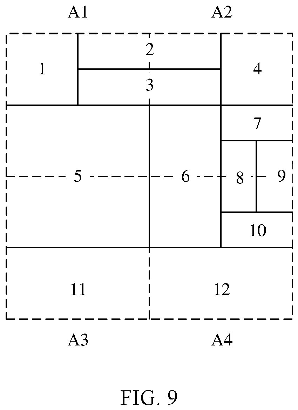

For example, FIG. 9 is an example schematic diagram of a current CU and a current rectangular region according to an embodiment of the present invention. As shown in FIG. 9, a CTU is split into four rectangular regions by using dashed lines: A1 to A4, and the CTU is split into 12 coding units by using solid lines: a CU 1 to a CU 12.
a: If the rectangular region that includes the upper left corner of the CU is determined as the current rectangular region to which the CU belongs, current rectangular regions to which the CU 1 to the CU 3 and the CU 5 belong are all A1, current rectangular regions to which the CU 4 and the CU 6 to the CU 9 belong are all A2, a current rectangular region to which the CU 11 belongs is A3, and current rectangular regions to which the CU 10 and the CU 12 belong are both A4.
b: If the rectangular region that includes the lower right corner of the CU is determined as the current rectangular region to which the CU belongs, a current rectangular region to which the CU 1 belongs is A1, current rectangular regions to which the CU 2 to the CU 4 and the CU 7 belong are all A2, current rectangular regions to which the CU 5 and the CU 11 belong are both A3, and current rectangular regions to which the CU 6, the CU 8 to the CU 10, and the CU 12 belong are all A4.

Step 602: Determine a target context model based on a quantity of luminance QP differential values that have been obtained through decoding in the current rectangular region.

The bitstream is decoded based on the target context model to obtain a target binary symbol. The target binary symbol indicates whether a luminance QP differential value of the current CU is 0, and the target binary symbol may be a binary symbol of the luminance QP differential value of the current CU. In this embodiment of the present invention, the binary symbol may also be referred to as a bin (bin).

A luminance QP differential value of any CU is a signed integer, and may be 0, a positive integer, or a negative integer. The luminance QP differential value of the CU is usually indicated by using two methods.

A first method is using a syntax element to indicate the luminance QP differential value of the CU. For example, a syntax element cu_qp_delta in the AVS2 standard is binarized by using unary code. For example, signed integers 0, 1, -1, 2, and -2 may be binarized into binary symbol strings 1, 01, 001, 0001, and 00001 respectively. A first binary symbol (namely, a target binary symbol) of the binary symbol strings indicates whether cu_qp_delta (indicating the luminance QP differential value of the CU) to which the first binary symbol (namely, the target binary symbol) belongs is 0. When the first binary symbol of cu_qp_delta is 1, it indicates that cu_qp_delta (that is, the luminance QP differential value of the CU) to which the first binary symbol belongs is 0. When the first binary symbol of cu_qp_delta is 0, it indicates that cu_qp_delta (that is, the luminance QP differential value of the CU) to which the first binary symbol belongs is not 0, and a bitstream continues to be parsed to obtain another binary symbol of cu_qp_delta, that is, a specific non-zero value of the luminance QP differential value of the CU.

After decoding the bitstream to obtain the first binary symbol of the syntax element cu_qp_delta, the decoder may determine, based on the binary symbol, that if the luminance QP differential value of the current CU is 0, parsing of the syntax element cu_qp_delta is completed; and if the luminance QP differential value of the current CU is not 0, need to continuously decode the bitstream to obtain the specific non-zero value of the syntax element cu_qp_delta.

A second method is using two syntax elements to indicate the luminance QP differential value of the CU, where one syntax element indicates an absolute value of the luminance QP differential value of the CU, and the other syntax element indicates a sign of the luminance QP differential value of the CU, for example, a syntax element cu_qp_delta_abs in the H.265 standard (indicating the absolute value of the luminance QP differential value of the CU) and a syntax element cu_qp_delta_sign_flag (indicating the sign of the luminance QP differential value of the CU). A first binary symbol (that is, a target binary symbol) obtained after cu_qp_delta_abs is binarized indicates whether the luminance QP differential value of the CU is 0. When the first binary symbol of cu_qp_delta_abs is 0, it indicates that cu_qp_delta_abs (that is, the absolute value of the luminance QP differential value of the CU) to which the first binary symbol belongs is 0, and cu_qp_delta_sign_flag is also 0. When the first binary symbol of cu_qp_delta_abs is 1, it indicates that cu_qp_delta_abs (that is, the absolute value of the luminance QP differential value of the CU) to which the first binary symbol belongs is not 0, and a bitstream continues to be parsed to obtain another binary symbol of cu_qp_delta_abs, that is, a specific non-zero value of the absolute value of the luminance QP differential value of the CU, and to determine whether cu_qp_delta_sign_flag (that is, the sign of the luminance QP differential value of the CU) indicates a plus sign or a minus sign. In another manner, when the first binary symbol of cu_qp_delta_abs is 1, it indicates that cu_qp_delta_abs (that is, the absolute value of the luminance QP differential value of the CU) to which the first binary symbol belongs is 0, and cu_qp_delta_sign_flag is also 0. When the first binary symbol of cu_qp_delta_abs is 0, it indicates that cu_qp_delta_abs (that is, the absolute value of the luminance QP differential value of the CU) to which the first binary symbol belongs is not 0, and a bitstream continues to be parsed to obtain another binary symbol of cu_qp_delta_abs, that is, a specific non-zero value of the absolute value of the luminance QP differential value of the CU, and to determine whether cu_qp_delta_sign_flag (that is, the sign of the luminance QP differential value of the CU) indicates a plus sign or a minus sign.

After decoding the bitstream to obtain the first binary symbol of the syntax element cu_qp_delta_abs, the decoder may determine, based on the binary symbol, that if the absolute value of the luminance QP differential value of the current CU is 0, parsing of the syntax element cu_qp_delta_abs is completed. When cu_qp_delta_abs is 0, the syntax element cu_qp_delta_sign_flag is 0 by default. In this case, to reduce bitstream overheads, the encoder may not need to transmit the syntax element cu_qp_delta_sign_flag in the bitstream; and if determining that the absolute value of the luminance QP differential value of the current CU is not 0, need to continuously decode the bitstream to obtain the specific non-zero value of the syntax element cu_qp_delta_abs, and to determine whether the syntax element cu_qp_delta_sign_flag indicates the plus sign or the minus sign. The decoder may obtain a luminance QP differential value CuDeltaQp=cu_qp_delta_abs^{∗}(cu_qp_delta_sign_flag?-1:1) of the current CU based on syntax elements cu_qp_delta_abs and cu_qp_delta_sign_flag. Optionally, the syntax element cu_qp_delta_sign_flag may be decoded in a bypass (bypass) mode of CABAC.

Optionally, if it is determined that the bitstream does not include the syntax element cu_qp_delta_abs, the decoder may determine that the luminance QP differential value CuDeltaQp of the current CU is 0.

At an encoder side, if the current CU is a CU that includes a luminance component and a chrominance component, and the luminance component or the chrominance component has a residual, the encoder may transmit a luminance QP differential value in a syntax element of the current CU; and the decoder correspondingly needs to parse the luminance QP differential value. If the current CU is a CU that includes only a luminance component, and the luminance component has a residual, the encoder may transmit a luminance QP differential value in a syntax element of the current CU; and the decoder correspondingly needs to parse the luminance QP differential value. If the current CU is a CU that includes only a chrominance component, the encoder may not transmit a luminance QP differential value in a syntax element of the current CU; and the decoder correspondingly does not need to parse the luminance QP differential value. If the current CU is a CU that includes a luminance component and a chrominance component, and neither the luminance component nor the chrominance component has a residual, the encoder may not transmit a luminance QP differential value in a syntax element of the current CU; and the decoder correspondingly does not need to parse the luminance QP differential value. If the current CU is a CU that includes only a luminance component, and the luminance component has no residual, the encoder may not transmit a luminance QP differential value in a syntax element of the current CU; and the decoder correspondingly does not need to parse the luminance QP differential value. For the foregoing cases in which the decoder does not need to parse the luminance QP differential value of the current CU, the decoder may assign a default value to the luminance QP differential value of the current CU, for example, 0.

Correspondingly, at a decoder side, if the decoder determines the luminance QP differential value of the current CU by parsing the binary symbol, the quantity of luminance QP differential values that have been obtained through decoding in the current rectangular region to which the current CU belongs is increased by 1. If the luminance QP differential value of the current CU does not explicitly appear in the bitstream, the quantity of luminance QP differential values that have been obtained through decoding in the current rectangular region to which the current CU belongs remains unchanged. For example, if the decoder enables the decoding method in this embodiment of the present invention, for the current rectangular region, in an initial stage of decoding the current rectangular region, the decoder may first initialize a quantity (NumDeltaQp) of luminance QP differential values that have been obtained through decoding in the current rectangular region, and coordinates (CuQpGroupX, CuQpGroupY) of the upper left corner of the current rectangular region, as shown below:

```
          if(!FixedQP&&CuDeltaQpFlag&&width*height>=CuQpGroupAreaSize){
              NumDeltaQp=0
              CuQpGroupX=x0
              CuQpGroupY=y0
```

}!FixedQP=1 indicates that a luminance QP in a patch (patch) or a slice (slice) of a picture is not fixed, and CuDeltaQpFlag=1 indicates that luminance QPs of CUs in any CTU in the picture are different. To be compatible with an existing standard, !FixedQP and CuDeltaQpFlag indicate enabling of the decoding method in the embodiment of the present invention in the AVS standard, that is, !FixedQP=1&&CuDeltaQpFlag=1 indicates that the decoding method in the embodiment of the present invention is enabled. width^{∗}height>=CuQpGroupAreaSize indicates that the area of the current CU is greater than or equal to the set area. NumDeltaQp is initialized to 0, indicating that the quantity of luminance QP differential values that have been obtained through decoding in the current rectangular region in the initial phase is 0. CuQpGroupX=x0 and CuQpGroupY=y0 indicate that the coordinates of the upper left corner of the current rectangular region are (x0, y0).

For the current CU, after obtaining the absolute value and the sign of the luminance QP differential value of the current CU through parsing, the decoder may add 1 to the quantity of luminance QP differential values that have been obtained through decoding in the current rectangular region, as shown below:

```
          if(!FixedQP&&CuDeltaQpFlag&&CuCtp&&(component!='COMPONENT_CHROMA')){
              cu_qp_delta_abs
              if(cu_qp_delta_abs)
                   cu_qp_delta_sign_flag
              NumDeltaQp+=1
```

}!FixedQP=1&&CuDeltaQpFlag=1 indicates that the decoding method in this embodiment of the present invention is enabled. component!='COMPONENT_CHROMA' indicates that a component of the current CU is not a chrominance component. cu_qp_delta_abs indicates the absolute value of the luminance QP differential value of the current CU. If cu_qp_delta_abs is not 0, cu_qp_delta_sign_flag (the sign of the luminance QP differential value of the current CU) is parsed. Based on the foregoing cases, NumDeltaQp is increased by 1, and NumDeltaQp may change with a decoding process of the decoder.

Therefore, when obtaining any current CU through parsing, the decoder may obtain a quantity of luminance QP differential values that have been obtained through decoding in a current rectangular region to which the current CU belongs. For example, if the current CU is a first CU to be decoded in the current rectangular region, the foregoing quantity is 0 when the current CU is decoded. If the current CU is not a first CU to be decoded in the current rectangular region, the foregoing quantity is an accumulated value when the current CU is decoded, and the accumulated value may be 0 or may not be 0.

In a possible implementation, the decoder may determine the target context model based on a smaller value in a first set threshold and the quantity of luminance QP differential values that have been obtained through decoding.

Optionally, the decoder first determines index offsets of a plurality of candidate context models that may be used to decode the bitstream; determines, as an index offset of the target context model, a smaller value in the first set threshold and the quantity of luminance QP differential values that have been obtained through decoding; and finally determines a candidate context model that is in the index offsets of the plurality of candidate context models and that is consistent with the index offset of the target context model as the target context model.

In this embodiment of the present invention, the first set threshold and the context model used to decode the bitstream may be preset, where the first set threshold corresponds to the quantity of the foregoing context models. For example, a plurality of context models are selected from a plurality of context models included in a context adaptive binary arithmetic coding (context adaptive binary arithmetic coding, CABAC) algorithm to decode a bitstream corresponding to a target binary symbol.

For example, a context model (also referred to as a binary symbol model) ctx=ctxArray[ctxIdx], where ctxarray is an array that stores the binary symbol model, and ctxIdx is an index value of the array (that is, a number of the binary symbol model). Therefore, the corresponding binary symbol model can be found from the ctxArray array based on ctxldx. A number of a binary symbol model used by the syntax element ctxIdx=ctxIdxStart + ctxIdxInc, where ctxIdxStart and ctxIdxInc are shown in Table 1.

**Table 1 ctxIdxStart and ctxIdxInc corresponding to syntax elements**

| Syntax element | ctxIdxInc | ctxIdxStart | ctx quantity |
|---|---|---|---|
| ··· | | | |
| ctp_y[i] | 0 | 144 | 1 |
| cu_qp_delta_abs | Refer to 8.3.3.2.xx | 145 | 4 |
| ··· | | | |

In this embodiment of the present invention, the target binary symbol is the first binary symbol of the syntax element cu_qp_delta_abs, and ctxIdxStart corresponding to the syntax element cu_qp_delta_abs is equal to 145. A total of four models may be used to parse the syntax element cu_qp_delta_abs, and index offsets ctxIdxInc of the four models are: 0, 1, 2, or 3. In this embodiment of the present invention, context models of binary symbols included in the syntax element cu_qp_delta_abs may be determined by using the following method:
If binIdx is 0, ctxIdxInc=min(NumDeltaQp, 2); otherwise
ctxIdxInc=3.

ctxIdxInc indicates an index offset of the context model, binIdx indicates a quantity of binary symbols of the syntax element cu_qp_delta_abs, that binIdx is 0 indicates the first binary symbol (that is, the target binary symbol) of the syntax element cu_qp_delta_abs, and that binIdx is not 0 indicates another binary symbol of the syntax element cu_qp_delta_abs other than the first binary symbol. NumDeltaQp indicates the quantity of luminance QP differential values that have been obtained through decoding in the current rectangular region. min() indicates to select a smaller value.

In the foregoing embodiment, the decoder may determine a start number (ctxIdxStart) of the context model of the syntax element cu_qp_delta_abs based on Table 1. For the first binary symbol (the target binary symbol) of the syntax element cu_qp_delta_abs, the index offset ctxIdxInc of the context model of the target binary symbol is determined by using the foregoing function in which a smaller value is selected, and the index ctxIdx of the context model of the target binary symbol is obtained. For another binary symbol of the syntax element cu_qp_delta_abs, an index offset ctxidxinc of a context model of the another binary symbol is equal to 3, and an index ctxIdx=148 of the context model of the another binary symbol is obtained.

In a possible implementation, the index offset ctxIdxInc of the target context model is equal to min(Num, X). X is a preset constant greater than or equal to 1, for example, X=1 or 2. Num indicates the quantity of luminance QP differential values that have been obtained through decoding in the current rectangular region to which the current CU belongs. min() indicates to select the smaller value.

For example, when X is 1, a value range of ctxIdxInc is 0 and 1. In this case, if the quantity of luminance QP differential values that have been obtained through decoding in the current rectangular region to which the current CU belongs is 0, the index offset ctxidxinc of the target context model is equal to 0. If the quantity of luminance QP differential values that have been obtained through decoding in the current rectangular region to which the current CU belongs is greater than 0, the index offset ctxIdxInc of the target context model is equal to 1. In other words, if the quantity of luminance QP differential values that have been obtained through decoding in the current rectangular region is 0, the bitstream is decoded by using a context model whose index offset is 0, to obtain the target binary symbol of the current CU. If the quantity of luminance QP differential values that have been obtained through decoding in the current rectangular region is greater than 0, the bitstream is decoded by using a context model whose index offset is 1, to obtain the target binary symbol of the current CU.

For example, when X is 2, a value range of ctxidxinc is 0, 1, and 2. In this case, if the quantity of luminance QP differential values that have been obtained through decoding in the current rectangular region to which the current CU belongs is 0, the index offset ctxidxinc of the target context model is equal to 0. If the quantity of luminance QP differential values that have been obtained through decoding in the current rectangular region to which the current CU belongs is 1, the index offset ctxIdxInc of the target context model is equal to 1. If the quantity of luminance QP differential values that have been obtained through decoding in the current rectangular region to which the current CU belongs is greater than 1, the index offset ctxIdxInc of the target context model is equal to 2. In other words, if the quantity of luminance QP differential values that have been obtained through decoding in the current rectangular region is 0, the bitstream is decoded by using a context model whose index offset is 0, to obtain the target binary symbol of the current CU. If the quantity of luminance QP differential values that have been obtained through decoding in the current rectangular region is 1, the bitstream is decoded by using a context model whose index offset is 1, to obtain the target binary symbol of the current CU. If the quantity of luminance QP differential values that have been obtained through decoding in the current rectangular region is greater than 1, the bitstream is decoded by using a context model whose index offset is 2, to obtain the target binary symbol of the current CU.

Optionally, the decoder may first determine the index offsets of the plurality of context models that may be used to decode the bitstream. When the quantity of luminance QP differential values that have been obtained through decoding is 0, if a luminance QP differential value of a previous CU is 0, the index offset of the target context model is 0. Alternatively, if a luminance QP differential value of a previous CU is not 0, the index offset of the target context model is 1, and the previous CU is a CU previous to the current CU in the decoding order. For example, the previous CU may be a left neighboring CU of the current CU, the previous CU may be an upper neighboring CU of the current CU, or the previous CU may be a decoded CU previous to the current CU. Alternatively, when the quantity of luminance QP differential values that have been obtained through decoding is not 0, the index offset of the target context model is 2. Alternatively, the index offset of the target context model is associated with the quantity of luminance QP differential values that have been obtained through decoding and a second set threshold. Finally, the context model that is in the index offsets of the plurality of context models and that is consistent with the index offset of the target context model is determined as the target context model.

Similarly, in this embodiment of the present invention, the first set threshold and the context model used to decode the bitstream corresponding to the target binary symbol may be preset, where the first set threshold corresponds to the quantity of the foregoing context models. For example, the target context model is selected from a plurality of candidate context models from a plurality of context models included in a CABAC algorithm to decode the bitstream corresponding to the target binary symbol.

If the quantity of luminance QP differential values that have been obtained through decoding in the current rectangular region is 0, a luminance QP differential value of the CU (the previous CU) decoded previous to the current CU is obtained. In this case, the previous CU and the current CU may belong to a same rectangular region or different rectangular regions. If the luminance QP differential value of the previous CU is 0, the index offset of the target context model is 0. If the luminance QP differential value of the previous CU is not 0, the index offset of the target context model is 1.

If the quantity of luminance QP differential values that have been obtained through decoding in the current rectangular region is greater than 0, the index offset of the target context model may be 2. Alternatively, the index offset of the target context model is associated with the quantity of luminance QP differential values that have been obtained through decoding and the second set threshold. For example, the index offset ctxIdxInc of the target context model is equal to min(Num-1, Y) + 2, where Y is the second set threshold.

It should be noted that, in this embodiment of the present invention, the target context model may be selected from several (for example, four in Table 1) candidate context models from the plurality of context models included in the CABAC algorithm in advance, to decode the bitstream corresponding to the target binary symbol. In other words, in this embodiment of the present invention, when the bitstream corresponding to the target binary symbol is decoded, there is no need to select the target context model from a large quantity of context models, and a selection range of context models can be reduced. When the target context model is selected, refer to the quantity of luminance QP differential values that have been obtained through decoding in the current rectangular region to which the current CU belongs, so that a matching rate between the target context model and a value of the target binary symbol can be improved, thereby improving decoding efficiency of the target binary symbol. This is especially applicable to a case in which most rectangular regions include only one or two CUs whose luminance QP differential values need to be transmitted, and a few rectangular regions include more than two CUs whose luminance QP differential values need to be transmitted. This can effectively reduce bit overheads of the QP differential value in the bitstream.

Step 603: Decode the bitstream based on the target context model to obtain the target binary symbol.

After determining the target context model, the decoder may decode, based on the model and by using a related technology, the bitstream corresponding to the target binary symbol, to obtain the target binary symbol.

It should be noted that, in this embodiment of the present invention, a bitstream corresponding to another binary symbol of the differential value of the luminance QP of the current CU may be decoded by using a related technology. This is not specifically limited in this embodiment of the present invention.

Step 604: Determine the luminance QP differential value of the current CU based on the target binary symbol.

If the luminance QP differential value of the current CU is indicated by using two syntax elements, for example, the syntax element cu_qp_delta_abs indicates the absolute value of the luminance QP differential value of the CU, and the syntax element cu_qp_delta_sign_flag indicates the sign of the luminance QP differential value of the CU, the decoder may determine, based on the target binary symbol, when the target binary symbol indicates that the luminance QP differential value of the current CU is 0, that both the sign and the absolute value of the current luminance QP differential value of the current CU are 0; and when the target binary symbol indicates that the luminance QP differential value of the current CU is not 0, to decode the bitstream to obtain the sign and the absolute value of the luminance QP differential value of the current CU.

If the luminance QP differential value of the current CU is indicated by using one syntax element, for example, the syntax element cu_qp_delta indicates the luminance QP differential value of the CU, which is a signed integer, the decoder may determine, based on the target binary symbol, when the target binary symbol indicates that the luminance QP differential value of the current CU is 0, that the current luminance QP differential value of the current CU is 0; and when the target binary symbol indicates that the luminance QP differential value of the current CU is not 0, to decode the bitstream to obtain the luminance QP differential value of the current CU.

Step 605: Obtain a luminance QP of the current CU based on the luminance QP differential value of the current CU and a luminance QP prediction value of the current CU.

In this embodiment of the present invention, the luminance QP prediction value of the current CU may be obtained by using the following method: When the current CU is not a CU that ranks first in the decoding order in the current rectangular region, a luminance QP of a previous CU is determined as the luminance QP prediction value of the current CU, where the previous CU is a CU previous to the current CU in the decoding order; or when the current CU is a CU that ranks first in the decoding order in the current rectangular region, a luminance QP of a neighboring CU of the current CU is determined as the luminance QP prediction value of the current CU, where the neighboring CU includes a luminance component. The neighboring CU may be the left neighboring CU and/or the upper neighboring CU of the current CU. In this way, for a CU that is not the first to be decoded in the rectangular region, the decoder may directly use a luminance QP of a CU that is decoded previous to the CU as a luminance QP prediction value of the CU. This improves efficiency of obtaining luminance QPs of CUs in the rectangular region, and further improves decoding efficiency.

In other words, if coordinates of an upper left corner of the current CU are equal to coordinates (CuQpGroupX, CuQpGroupY) of an upper left corner of the current rectangular region, it indicates that the current CU is a CU whose decoding order ranks first in the current rectangular region. The luminance QP prediction value PreviousCuQP of the current CU is equal to a luminance QP of the left neighboring CU of the current CU, and the left neighboring CU includes a luminance component. Otherwise, (that is, the coordinates of the upper left corner of the current CU are not equal to the coordinates (CuQpGroupX, CuQpGroupY) of the upper left corner of the current rectangular region, and it indicates that the current CU is not the CU whose decoding order ranks first in the current rectangular region), the luminance QP prediction value PreviousCuQP of the current CU is equal to a luminance QP of a previous CU of the current CU, and the previous CU also includes a luminance component.

Optionally, when the current CU is not the CU that ranks first in the decoding order in the current rectangular region, the decoder may obtain the luminance QP prediction value of the current CU by using the related technology. For example, a syntax element qPY_PRED in the HEVC standard may be obtained through prediction based on a luminance QP of a left neighboring location of a current QG and a luminance QP of an upper neighboring location of the current QG. The left neighboring location of the current QG is (xQg-1, yQg), and the upper neighboring location is (xQg, yQg-1). The luminance QP at the upper neighboring location is a luminance QP of a CU covering the upper neighboring location. If the upper neighboring location is unavailable or does not belong to a same tile (Tile) as the current block, the luminance QP at the upper neighboring location is set to a luminance QP of a last CU in a previous QG (for example, qPY_PREV in the HEVC standard). Similarly, the luminance QP at the left neighboring location is a luminance QP of a coding unit covering the left neighboring location. If the left neighboring location is unavailable or does not belong to a same tile as the current block, the luminance QP at the left neighboring location is set to the luminance QP of the last CU in the previous QG.

The current CU is not the CU that ranks first in the decoding order in the current rectangular region, indicating that the decoder has decoded one or more other CUs in the current rectangular region before the current CU. It should be noted that, for the one or more CUs herein, only whether the one or more CUs are decoded to obtain a reconstructed block is considered, and whether the one or more CUs are decoded to obtain a luminance QP differential value of the one or more CUs is not considered.

The decoder may add the luminance QP prediction value of the current CU and the luminance QP differential value of the current CU to obtain the luminance QP of the current CU.

In a possible implementation, if FixedQP is 1 (indicating that a luminance QP in a patch (patch) or slice (slice) of a picture is fixed), or CuDeltaQpFlag is 0 (indicating that luminance QPs of CUs in any CTU in the picture are the same), the luminance QP of the current CU, that is, CurrentQp is equal to a luminance QP prediction value PreviousQp of the current CU plus a luminance QP differential value lcuQpDelta of an LCU in which the current CU is located;
if FixedQP is 0 (indicating that a luminance QP in a patch (patch) or slice (slice) of a picture is not fixed), CuDeltaQpFlag is 1 (indicating that luminance QPs of CUs in any CTU in the picture are different), and the current CU includes only a chrominance component, the luminance QP of the current CU, that is, CurrentQp is equal to a luminance QP of a 4x4 sub-block at the lower right corner of the current CU; or
if FixedQP is 0 (indicating that a luminance QP in a patch (patch) or slice (slice) of a picture is not fixed), CuDeltaQpFlag is 1, (indicating that luminance QPs of CUs in any CTU in the picture are different), and CuCtp is equal to 0, the luminance QP of the current CU, that is, CurrentQp is equal to a luminance QP prediction value PreviousCuQP of the current CU.

Alternatively, in addition to the foregoing several cases, the luminance QP of the current CU, that is, CurrentQp is equal to a luminance QP prediction value PreviousCuQP of the current CU plus a luminance QP differential value CuDeltaQp of the current CU.

In this embodiment of the present invention, a context model of the first binary symbol of the luminance QP differential value of the current CU is determined based on a quantity of CUs whose luminance QP differential values have been obtained through decoding in a set rectangular region. Therefore, a first luminance QP differential value and a non-first luminance QP differential value in the set rectangular region are used to model, by using different context models, a probability model to determine whether the first luminance QP differential value and the non-first luminance QP differential value are 0. This is especially applicable to a case in which most rectangular regions include only one or two CUs whose luminance QP differential values need to be transmitted, and a few set rectangular regions include more than two CUs whose luminance QP differential values need to be transmitted, when a QP differential value that is always 0 is encoded, only a few bits need to be consumed (a typical value is about 0.05% of a total bit rate). This can effectively reduce bit overheads of the luminance QP differential value in the bitstream in this case, and improves encoding efficiency. In addition, in this embodiment of the present invention, luminance QP differential values may be separately set for CUs in the set rectangular region, so that a solution of the luminance QP differential value is more flexible.

After obtaining the luminance QP of the current CU, the decoder may perform inverse quantization processing based on the luminance QP to obtain a luminance inverse quantization coefficient of the current CU, perform inverse transform processing on the luminance inverse quantization coefficient of the current CU to obtain a luminance residual block of the current CU, and obtain a luminance reconstructed block of the current CU based on the luminance residual block of the current CU. For this process, refer to description of the foregoing decoder 30. Details are not described herein again.

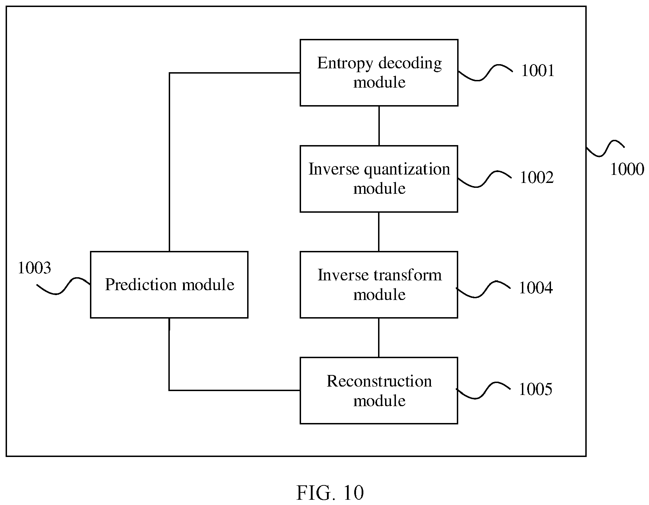

FIG. 10 is an example schematic diagram of a structure of a decoding apparatus 1000 according to an embodiment of the present invention. The decoding apparatus 1000 may correspond to the video decoder 30. The decoding apparatus 1000 includes an entropy decoding module 1001, an inverse quantization module 1002, a prediction module 1003, an inverse transform module 1004, and a reconstruction module 1005, which are configured to implement the method embodiment shown in FIG. 6. In an example, the entropy decoding module 1001 may correspond to the entropy decoding unit 304 in FIG. 3, the inverse quantization module 1002 may correspond to the inverse quantization unit 310 in FIG. 3, the prediction module 1003 may correspond to the intra frame prediction unit 344 or the inter frame prediction unit 354 in FIG. 3, the inverse transform module 1004 may correspond to the inverse transform processing unit 312 in FIG. 3, and the reconstruction module 1005 may correspond to the reconstruction unit 314 in FIG. 3. For details of the apparatus embodiment, refer to the foregoing method embodiments and the embodiment shown in FIG. 3. Details are not described herein again.

In an implementation process, the steps in the foregoing method embodiments may be completed by using a hardware integrated logic circuit in a processor or instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the method disclosed in embodiments of the present invention may be directly performed by a hardware coding processor, or may be performed by a combination of hardware and software modules in the coding processor. The software module may be located in a mature storage medium in the art, for example, a random access memory, a flash memory, a read-only memory, a programmable read-only memory, an electrically erasable programmable memory, a register, or the like. The storage medium is located in the memory, and the processor reads information in the memory and implements the step in the foregoing method in combination with hardware of the processor

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memories in the systems and methods described in this specification include but are not limited to these memories and any memory of another suitable type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of the present invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of the present invention, it should be understood that the disclosed systems, apparatuses, and methods may be implemented in other manners. For example, the described apparatus embodiments are merely examples. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in embodiments of the present invention, or the part contributing to the conventional technology, or some of the technical solutions may be implemented in a form of a software product. The computer software product is stored in a storage medium, and includes several instructions for instructing a computer device (a personal computer, a server, or a network device) to perform all or some of the steps of the methods described in embodiments of the present invention. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing description is merely a specific implementation of the present invention, but is not intended to limit the protection scope of the present invention. Any variation or replacement readily figured out by a person skilled in the art within the technical scope disclosed in the present invention shall fall within the protection scope of the present invention. Therefore, the protection scope of embodiments of the present invention shall be subject to the protection scope of the claims.

## Claims

1. A quantization parameter decoding method, comprising:
determining a current rectangular region to which a current coding unit CU belongs, wherein the current rectangular region is one of a plurality of rectangular regions comprised in a to-be-decoded coding tree unit CTU, and all of the plurality of rectangular regions meet a preset condition;
determining a target context model based on a quantity of luminance quantization parameter QP differential values that have been obtained through decoding in the current rectangular region;
decoding a bitstream based on the target context model to obtain a target binary symbol, wherein the target binary symbol indicates whether a luminance QP differential value of the current CU is 0, and the target binary symbol is a binary symbol of the luminance QP differential value of the current CU;
determining the luminance QP differential value of the current CU based on the target binary symbol; and
obtaining a luminance QP of the current CU based on the luminance QP differential value of the current CU and a luminance QP prediction value of the current CU.

2. The method according to claim 1, wherein that all of the plurality of rectangular regions meet a preset condition comprises any one or more of the following cases:
an area of one or more rectangular regions in the plurality of rectangular regions is equal to twice a set area, and the one or more rectangular regions are split into three coding tree nodes in a triple tree split mode; or
an area of one or more rectangular regions in the plurality of rectangular regions is equal to a set area, and the one or more rectangular regions are split into at least two coding tree nodes.

3. The method according to claim 1 or 2, wherein the determining a target context model based on a quantity of luminance quantization parameter QP differential values that have been obtained through decoding in the current rectangular region comprises:
determining the target context model based on a smaller value in a first set threshold and the quantity of luminance QP differential values that have been obtained through decoding.

4. The method according to claim 3, wherein the determining the target context model based on a smaller value in a first set threshold and the quantity of luminance QP differential values that have been obtained through decoding comprises:
determining, as an index offset of the target context model, the smaller value in the first set threshold and the quantity of luminance QP differential values that have been obtained through decoding; or
determining, from a plurality of candidate context models, a candidate context model that is in index offsets of the plurality of candidate context models and that is consistent with an index offset of the target context model as the target context model.

5. The method according to any one of claims 1 to 4, wherein the luminance QP prediction value of the current CU is obtained by using the following method:
when the current CU is not a CU that ranks first in a decoding order in the current rectangular region, determining a luminance QP of a previous CU as the luminance QP prediction value of the current CU, wherein the previous CU is a CU previous to the current CU in the decoding order; or
when the current CU is a CU that ranks first in a decoding order in the current rectangular region, determining a luminance QP of a neighboring CU of the current CU as the luminance QP prediction value of the current CU, wherein the neighboring CU comprises a luminance component.

6. The method according to any one of claims 1 to 5, wherein the determining the luminance QP differential value of the current CU based on the target binary symbol comprises:
when the target binary symbol indicates that the luminance QP differential value of the current CU is 0, determining that both a sign and an absolute value of the luminance QP differential value of the current CU are 0; and
when the target binary symbol indicates that the luminance QP differential value of the current CU is not 0, decoding the bitstream to obtain the sign and the absolute value of the luminance QP differential value of the current CU.

7. The method according to any one of claims 1 to 6, wherein a syntax element indicating the luminance QP differential value of the current CU comprises a first syntax element indicating the sign of the luminance QP differential value of the current CU and a second syntax element indicating the absolute value of the luminance QP differential value of the current CU.

8. The method according to any one of claims 1 to 7, wherein the method further comprises:
performing inverse quantization processing based on the luminance QP of the current CU to obtain a luminance inverse quantization coefficient of the current CU;
performing inverse transform processing based on the luminance inverse quantization coefficient of the current CU to obtain a luminance residual of the current CU; and
reconstructing a luminance component of the current CU based on the luminance residual of the current CU.

9. The method according to any one of claims 1 to 8, wherein the determining a current rectangular region to which a current coding unit CU belongs comprises:
determining a rectangular region that is in the plurality of rectangular regions and that comprises an upper left corner of the current CU as the current rectangular region;
determining a rectangular region that is in the plurality of rectangular regions and that comprises a lower right corner of the current CU as the current rectangular region; or
determining a rectangular region that is in the plurality of rectangular regions and that comprises a center point of the current CU as the current rectangular region.

10. A decoding apparatus, comprising:
an entropy decoding module, configured to: determine a current rectangular region to which a current coding unit CU belongs, wherein the current rectangular region is one of a plurality of rectangular regions comprised in a to-be-decoded coding tree unit CTU, and all of the plurality of rectangular regions meet a preset condition; determine a target context model based on a quantity of luminance quantization parameter QP differential values that have been obtained through decoding in the current rectangular region; and decode a bitstream based on the target context model to obtain a target binary symbol, wherein the target binary symbol indicates whether a luminance QP differential value of the current CU is 0, and the target binary symbol is a binary symbol of the luminance QP differential value of the current CU; and
an inverse quantization module, configured to: determine the luminance QP differential value of the current CU based on the target binary symbol, and obtain a luminance QP of the current CU based on the luminance QP differential value of the current CU and a luminance QP prediction value of the current CU.

11. The apparatus according to claim 10, wherein that all of the plurality of rectangular regions meet a preset condition comprises any one or more of the following cases:
an area of one or more rectangular regions in the plurality of rectangular regions is equal to twice a set area, and the one or more rectangular regions are split into three coding tree nodes in a triple tree split mode; or
an area of one or more rectangular regions in the plurality of rectangular regions is equal to a set area, and the one or more rectangular regions are split into at least two coding tree nodes.

12. The apparatus according to claim 10 or 11, wherein the entropy decoding module is specifically configured to determine the target context model based on a smaller value in a first set threshold and the quantity of luminance QP differential values that have been obtained through decoding.

13. The apparatus according to claim 12, wherein the entropy decoding module is specifically configured to:
determine, as an index offset of the target context model, the smaller value in the first set threshold and the quantity of luminance QP differential values that have been obtained through decoding; or determine, from a plurality of candidate context models, a candidate context model that is in index offsets of the plurality of candidate context models and that is consistent with an index offset of the target context model as the target context model.

14. The apparatus according to any one of claims 10 to 13, further comprising:
a prediction module, configured to: when the current CU is not a CU that ranks first in a decoding order in the current rectangular region, determine a luminance QP of a previous CU as the luminance QP prediction value of the current CU, wherein the previous CU is a CU previous to the current CU in the decoding order; or when the current CU is a CU that ranks first in a decoding order in the current rectangular region, determine a luminance QP of a neighboring CU of the current CU as the luminance QP prediction value of the current CU, wherein the neighboring CU comprises a luminance component.

15. The apparatus according to any one of claims 10 to 14, wherein the inverse quantization module is specifically configured to: when the target binary symbol indicates that the luminance QP differential value of the current CU is 0, determine that both a sign and an absolute value of the luminance QP differential value of the current CU are 0; and when the target binary symbol indicates that the luminance QP differential value of the current CU is not 0, decode the bitstream to obtain the sign and the absolute value of the luminance QP differential value of the current CU.

16. The apparatus according to any one of claims 10 to 15, wherein a syntax element indicating the luminance QP differential value of the current CU comprises a first syntax element indicating the sign of the luminance QP differential value of the current CU and a second syntax element indicating the absolute value of the luminance QP differential value of the current CU.

17. The apparatus according to any one of claims 10 to 16, further comprising an inverse transform module and a reconstruction module, wherein
the inverse quantization module is further configured to perform inverse quantization processing based on the luminance QP of the current CU to obtain a luminance inverse quantization coefficient of the current CU;
the inverse transform module is configured to perform inverse transform processing based on the luminance inverse quantization coefficient of the current CU to obtain a luminance residual of the current CU; and
the reconstruction module is configured to reconstruct a luminance component of the current CU based on the luminance residual of the current CU.

18. The apparatus according to any one of claims 10 to 17, wherein the entropy decoding module is specifically configured to: determine a rectangular region that is in the plurality of rectangular regions and that comprises an upper left corner of the current CU as the current rectangular region; determine a rectangular region that is in the plurality of rectangular regions and that comprises a lower right corner of the current CU as the current rectangular region; or determine a rectangular region that is in the plurality of rectangular regions and that comprises a center point of the current CU as the current rectangular region.

19. A decoder, comprising a processing circuit, configured to perform the method according to any one of claims 1 to 9.

20. A computer program product, comprising program code, wherein when the program code is executed on a computer or a processor, the program code is used to perform the method according to any one of claims 1 to 9.

21. A decoder, comprising:
one or more processors; and
a non-transitory computer-readable storage medium, coupled to the processor and storing a program executed by the processor, wherein when executed by the processor, the program enables the decoder to perform the method according to any one of claims 1 to 9.

22. A non-transitory computer-readable storage medium, comprising program code, wherein when the program code is executed by a computer device, the program code is used to perform the method according to any one of claims 1 to 9.
